# EUROPÄISCHE PATENTSCHRIFT

(11) **EP 1 411 104 B1**
(45) Veröffentlichungstag und Bekanntmachung des Hinweises auf die Patenterteilung: **16.05.2007**
(21) Anmeldenummer: 03023042.9
(22) Anmeldetag: 14.10.2003
(51) Int. Cl.: C09K 19/04, C09K 19/20, C09K 19/30, C09K 19/32, C09K 19/42

(54) **Flüssigkristalline Verbindungen mit CHFO-Brücke**
Liquid crystalline compounds with a -CHFO- bridge
Composés liquides cristallins comportant un pont -CHFO-

(30) Priorität: 15.10.2002 DE 10248027
(43) Veröffentlichungstag der Anmeldung: 21.04.2004
(73) Patentinhaber: Merck Patent GmbH, 64293 Darmstadt (DE)
(72) Erfinder: Kirsch, Peer, Dr., 64342 Seeheim-Jugenheim (DE); Lenges, Marc, 64823 Gross-Umstadt (DE); Heckmeier, Michael, Dr., 69502 Hemsbach (DE); Lüssem, Georg, Dr., 85238 Petershausen (DE)

(56) Entgegenhaltungen:
- EP-A- 0 460 436
- EP-A- 1 215 270
- WO-A-94/21747
- DE-A- 10 303 638
- DE-A- 19 504 518

## Beschreibung

Die vorliegende Erfindung betrifft flüssigkristalline Verbindungen mit CHFO-Brücke, diese enthaltende flüssigkristalline Medien aus zwei oder mehr flüssigkristallinen Verbindungen, sowie diese Medien enthaltende elektrooptische Anzeigen.

Flüssige Kristalle werden vor allem als Dielektrika in Anzeigenvorrichtungen verwendet, da die optischen Eigenschaften solcher Substanzen durch eine angelegte Spannung beeinflusst werden können. Elektrooptische Vorrichtungen auf der Basis von Flüssigkristallen sind dem Fachmann bestens bekannt und können auf verschiedenen Effekten beruhen. Derartige Vorrichtungen sind beispielsweise Zellen mit dynamischer Streuung. DAP-Zellen (Deformation ausgerichteter Phasen), Gast/Wirt-Zellen, TN (twisted nematic)-Zellen mit verdrillt nematischer Struktur, STN (super-twisted nematic)-Zellen, SBE (superbirefringence effect)-Zellen und OMI (optical mode interference)-Zellen. Die gebräuchlichsten Anzeigevorrichtungen beruhen auf dem Schadt-Helfrich Effekt und besitzen eine verdrillt nematische Struktur.

Im Stand der Technik sind flüssigkristalline Verbindungen mit einer Gruppe -CHF-O- bekannt.

EP 0 460 436 A2 offenbart Verbindungen mit Endgruppen der Formel -OCHF-H/F/Cl. Gegenstand des Dokuments DE 195 04 518 A1 sind ebenfalls flüssigkristalline Verbindungen mit einer Endgruppe der Formel -CHF-O-R². In der EP 1 215 270 A1 werden unter anderem Endgruppen der Formel -OCHF-F/CI offenbart. Der Gegenstand des Dokuments WO 94/21747 sind 1,2,2,2-Tetrafluorethylether mit einer Endgruppe der Formel -O-CHF-CF₃.

Den vier Offenbarungen ist gemeinsam, dass die Einheit -CHFO- nur als Teil einer endständigen Kette auftritt, also nicht als Brücke zwischen zwei Ringen.

Die Flüssigkristallmaterialien müssen allgemein eine gute chemische und thermische Stabilität und eine gute Stabilität gegenüber elektrischen Feldern und elektromagnetischer Strahlung besitzen. Ferner sollten die Flüssigkristallmaterialien niedere Viskosität aufweisen und in den Zellen kurze Schaltzeiten, tiefe Schwellenspannungen und einen hohen Kontrast ergeben.

Weiterhin sollten sie bei üblichen Betriebstemperaturen, d. h. in einem möglichst breiten Bereich unterhalb und oberhalb Raumtemperatur, eine geeignete Mesophase besitzen, beispielsweise für die oben genannten Zellen eine nematische Mesophase. Da Flüssigkristalle in der Regel als Mischungen mehrerer Komponenten zur Anwendung gelangen, ist es wichtig, dass die Komponenten untereinander gut mischbar sind. Weitere Eigenschaften, wie die elektrische Leitfähigkeit, die dielektrische Anisotropie und die optische Anisotropie, müssen je nach Zellentyp und Anwendungsgebiet unterschiedlichen Anforderungen genügen. Beispielsweise sollten Materialien für Zellen mit verdrillt nematischer Struktur eine positive dielektrische Anisotropie und eine geringe elektrische Leitfähigkeit aufweisen.

Beispielsweise sind für Matrix-Flüssigkristallanzeigen mit integrierten nichtlinearen Elementen zur Schaltung einzelner Bildpunkte (MFK-Anzeigen) flüssigkristalline Medien mit großer positiver dielektrischer Anisotropie, breiten nematischen Phasen, relativ niedriger Doppelbrechung, sehr hohem spezifischen Widerstand, guter Licht- und Temperaturstabilität und geringem Dampfdruck erwünscht.

Derartige Matrix-Flüssigkristallanzeigen sind bekannt. Als nichtlineare Elemente zur individuellen Schaltung der einzelnen Bildpunkte können neben passiven Elementen wie Varistoren oder Dioden aktive Elemente wie Transistoren verwendet werden. Man spricht dann von einer "aktiven Matrix".

Bei den aussichtsreichen TFT (thin film transistor)-Displays wird als elektrooptischer Effekt üblicherweise der TN-Effekt ausgenutzt. Man unterscheidet TFT's aus Verbindungshalbleitern wie z. B. CdSe oder TFT's auf der Basis von polykristallinem oder amorphem Silizium.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, dass je ein Filterelement einem schaltbaren Bildelelement gegenüber liegt. Die TFT-Anzeigen arbeiten üblicherweise als TN-Zellen mit gekreuzten Polarisatoren in Transmission und sind von hinten beleuchtet.

Derartige MFK-Anzeigen werden als Displays in Notebook-Computern, TV-Geräten (Taschenfernseher) sowie im Automobil- oder Flugzeugbau eingesetzt. Dabei sind die Winkelabhängigkeit des Kontrastes und die Schaltzeiten dieser MFK-Anzeigen nicht immer zufriedenstellend. Schwierigkeiten sind auch durch einen nicht ausreichend hohen spezifischen Widerstand der Flüssigkristallmischungen bedingt. Mit abnehmendem Widerstand verschlechtert sich der Kontrast einer MFK-Anzeige und es kann das Problem des "image sticking" auftreten. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig, um akzeptable Lebensdauern zu erhalten. Insbesondere bei Gemischen mit niedriger Schwellenspannung war es bisher nicht möglich, sehr hohe spezifische Widerstände zu realisieren, da flüssigkristalline Materialien mit hoher positiver dielektrischer Anisotropie Δε im allgemeinen auch eine höhere elektrische Leitfähigkeit aufweisen. Weiterhin ist es wichtig, dass der spezifische Widerstand eine möglichst geringe Zunahme bei steigender Temperatur sowie nach Temperatur- und/oder Licht-Belastung zeigt. Um kurze Schaltzeiten der Anzeigen zu realisieren, müssen die Mischungen ferner eine kleine Rotationsviskosität aufweisen. Um einen Gebrauch der Anzeigen auch bei tiefen Temperaturen zu ermöglichen, beispielsweise für Anwendungen im Freien, im Automobil oder in der Avionik, dürfen auch bei tiefen Temperaturen keine Kristallisation und/oder smektische Phasen auftreten. Weiterhin sollte die Temperaturabhängigkeit der Viskosität möglichst gering sein.

Flüssigkristallmischungen mit günstigem Eigenschaftsprofil werden auch von den in jüngster Zeit entwickelten liquid-crystal-on-silicon (LCoS)-Projektionsdisplays benötigt. Wegen der geringen Pixelgröße im Bereich von 20 µm, der hohen Auflösung und der angestrebten kurzen Schaltzeiten der Displays sind geringe Schichtdicken erforderlich, für deren Realisierung Flüssigkristallmischungen mit vergleichsweise hohem Wert der optischen Doppelbrechung Δn benötigt werden. Flüssigkristalline Verbindungen mit hoher Doppelbrechung weisen häufig eine intrinsische smektische Phase auf, oder induzieren die Ausbildung einer smektischen Phase im Gemisch mit anderen flüssigkristallinen Verbindungen, was sich nachteilig auf die Tieftemperaturstabilität der Displays auswirkt.

Es besteht somit ein hoher Bedarf an flüssigkristallinen Medien mit folgendenen Eigenschaften:
- hohe Doppelbrechung Δn für geringe Schichtdicken der Displays;
- hohe positive dielektrische Anisotropie Δε für niedrige Schwellenspannung Vₜₕ;
- geringe Rotationsviskosität γ₁ für kurze Schaltzeiten;
- hohe Beständigkeit gegenüber Lichtstrahlung, Wärme sowie eine hohe chemische Stabilität für eine lange Lebensdauer der Displays;
- insbesondere zu tiefen Temperaturen erweiterter nematischer Phasenbereich und geringe Temperaturabhängigkeit der Viskosität für Einsatz der Displays auch bei tiefen Temperaturen;

Der Erfindung liegt die Aufgabe zugrunde, flüssigkristalline Medien für IPS-, MFK-, OCB-, TN- oder STN- und LCoS-Anzeigen mit verbesserten Eigenschaften bereitzustellen. Hierfür werden flüssigkristalline Verbindungen mit vorteilhaften Eigenschaften gesucht, die insbesondere einen breiten nematischen Phasenbereich, hohen Klärpunkt, eine niedrige Rotationsviskosität, eine sehr gute Löslichkeit in flüssigkristallinen Medien sowie eine gute Voltage Holding Ratio aufweisen.

Aufgabe der Erfindung ist daher auch flüssigkristalline Verbindungen mit vorteilhaften Eigenschaften zur Verfügung zu stellen.

Diese Aufgabe wird gelöst durch flüssigkristalline Verbindung der allgemeinen Formeln (II) oder (III)

R-Aₙ-Z¹-A-X (II)

R-A-Z¹-A-Z²-Aₘ-X (III)

worin bedeuten
- n: 1, 2 oder 3,
- A: jeweils unabhängig voneinander 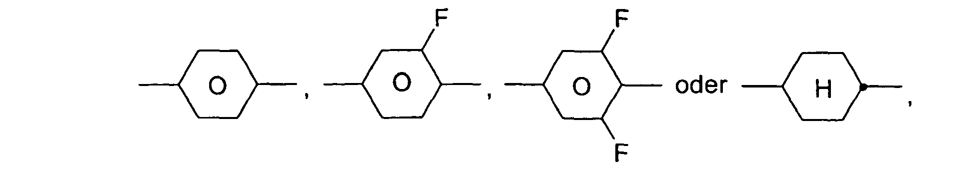
- Z¹: -CHF-O-,
- Z²: eine Einfachbindung oder -CO-O-,
- X: -F, -Cl, -CN, -CF₃, -OCF₃ oder -OCHF₂,
- R: Wasserstoff, einen unsubstituierten oder ein- oder mehrfach durch Fluor substituierten linearen oder verzweigten Alkyl-, Alkoxy-, Alkenyloxy oder Alkenylrest mit 1 bis 10 bzw. 2 bis 10 C-Atomen, worin eine oder mehrere CH₂-Gruppen durch -O- ersetzt sein können,und
- m: 1 oder 2.

A in Formel (I) sind unabhängig voneinander, das heißt sie können gleich oder verschieden sein.

R in den allgemeinen Formeln (II / III) kann Wasserstoff, ein Alkylrest oder ein Alkoxyrest mit 1 bis 10 C-Atomen sein, der geradkettig oder verzweigt sein kann. Vorzugsweise ist er geradkettig, hat 1, 2, 3, 4, 5, 6 oder 7 C-Atome und ist demnach bevorzugt Methyl, Ethyl, Propyl, Butyl, Pentyl, Hexyl, Heptyl, Methoxy, Ethoxy, Propoxy, Butoxy, Pentoxy, Hexoxy oder Heptoxy.

In R kann ein oder mehrere CH₂-Gruppen durch -O- ersetzt sein. R und X können beispielsweise jeweils unabhängig voneinander Oxaalkyl sein, vorzugweise geradkettiges 2-Oxapropyl (= Methoxymethyl), 2-(= Ethoxymethyl) oder 3-Oxabutyl (= Methoxyethyl), 2-, 3- oder 4-Oxapentyl, 2-, 3-, 4- oder 5-Oxahexyl, 2-, 3-, 4-, 5- oder 6-Oxaheptyl.

R kann ein Alkenylrest mit 2 - 10 C-Atomen sein, der geradkettig oder verzweigt sein kann. Vorzugsweise ist er geradkettig und hat 2 bis 7 C-Atome. Er ist demnach insbesondere Vinyl, Prop-1-, oder Prop-2-enyl, But-1-, 2- oder But-3-enyl, Pent-1-, 2-, 3- oder Pent-4-enyl, Hex-1-, 2-, 3-, 4- oder Hex-5-enyl, Hept-1-, 2-, 3-, 4-, 5- oder Hept-6-enyl.

R kann ein- oder mehrfach substituiert sein. Der Rest R schließt auch perfluorierte Reste ein. Bei Einfachsubstitution kann der Fluor in beliebiger Position sein, vorzugsweise ist er in ω-Position.

Besonders bevorzugt ist R in den allgemeinen Formeln (II) und (III) ein Alkylrest, Alkoxyrest oder Alkenylrest mit 1 bis 7 bzw. 2 bis 7 C-Atomen.

Beispiele sind die Verbindungen der allgemeinen Formeln (VI) bis (XV): (L¹⁻⁶: unabhängig voneinander H oder F) 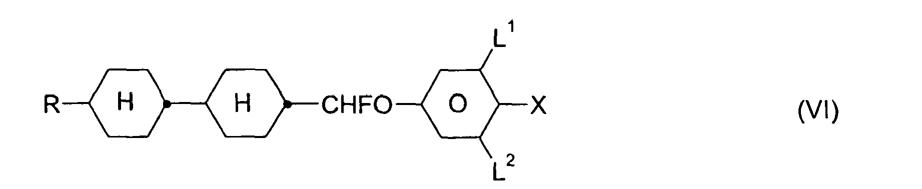 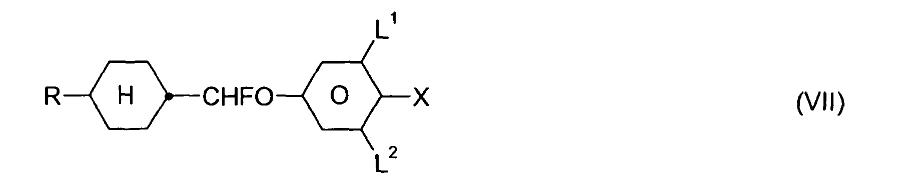 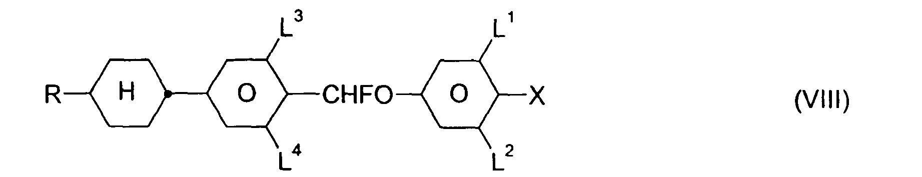 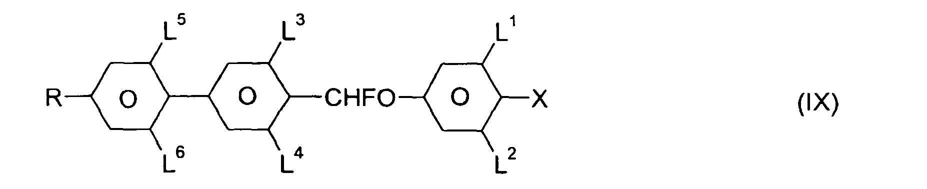 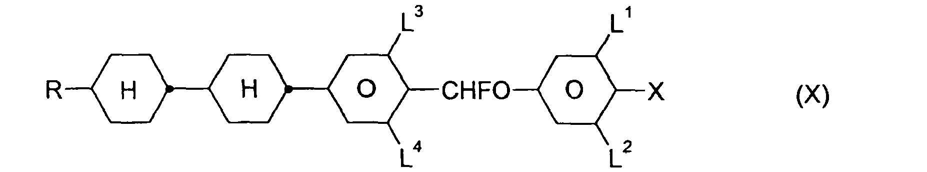 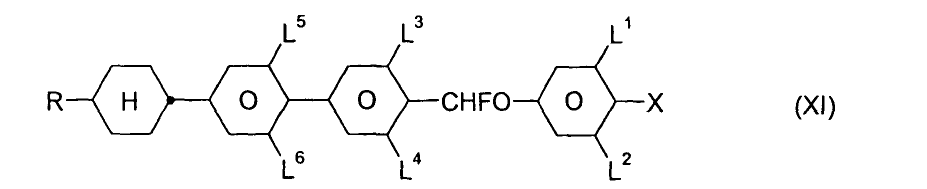 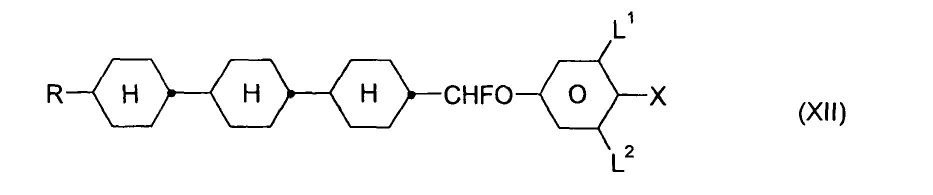 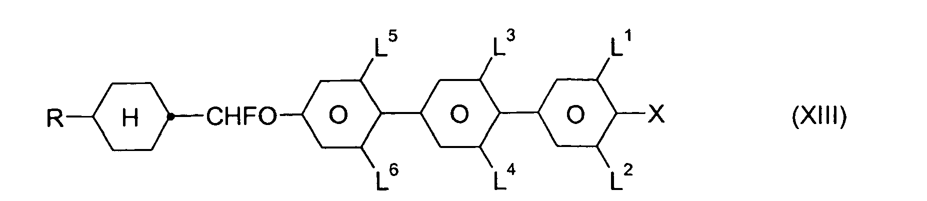 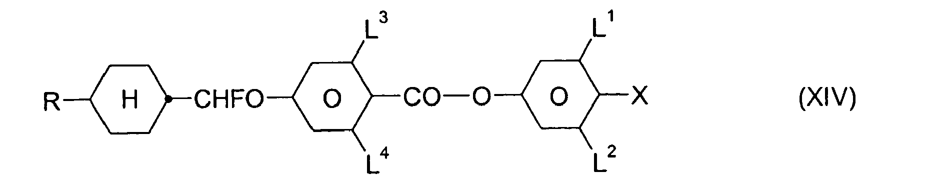 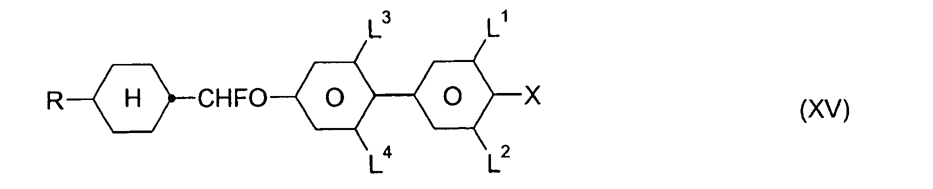 worin
- L: jeweils unabhängig voneinander H oder F sein kann.

Verbindungen mit einer CHFO-Brücke können beispielsweise gemäß den nachstehenden Reaktionsschemata hergestellt werden.

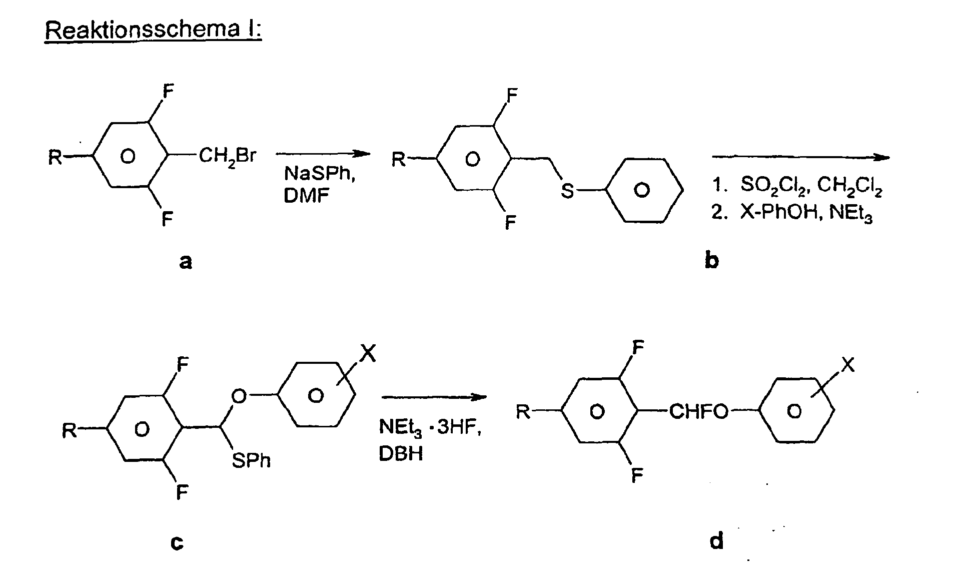

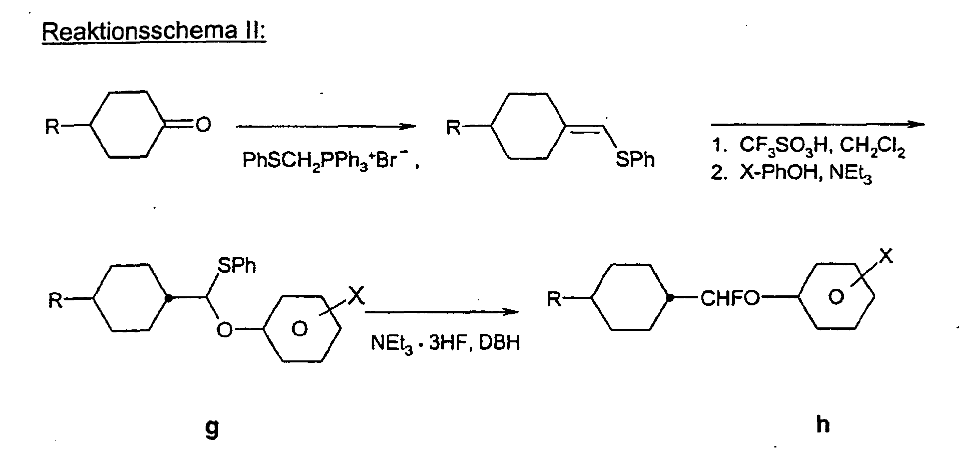

Bezüglich der Durchführung der Umsetzungen wird auf die Beispiele verwiesen.

Die dargestellten Reaktionen sind nur als beispielhaft aufzufassen. Der Fachmann kann entsprechende Variationen der vorgestellten Synthesen vornehmen sowie auch andere geeignete Synthesewege beschreiten, um Verbindungen der allgemeinen Formeln (II) bis (XVII) zu erhalten.

Wie bereits erwähnt, können die Verbindungen der allgemeinen Formeln (II) bis (XVII) zur Herstellung flüssigkristalliner Mischungen verwendet werden. Gegenstand der Erfindung ist daher auch ein flüssigkristallines Medium mit mindestens zwei flüssigkristallinen Verbindungen, umfassend mindestens eine Verbindung der allgemeinen Formeln (II) bis (XVII).

Gegenstand der vorliegenden Erfindung sind auch flüssigkristalline Medien enthaltend neben einer oder mehreren erfindungsgemäßen Verbindungen der allgemeinen Formeln (II) bis (XVII) als weitere Bestandteile 2 bis 40, insbesondere 4 bis 30 Komponenten. Ganz besonders bevorzugt enthalten diese Medien neben einer oder mehreren erfindungsgemäßen Verbindungen 7 bis 25 Komponenten. Diese weiteren Bestandteile werden vorzugsweise ausgewählt aus nematischen oder nematogenen (monotropen oder isotropen) Substanzen, insbesondere Substanzen aus den Klassen der Azoxybenzole, Benzylidenaniline, Biphenyle, Terphenyle, Phenyl- oder Cyclohexylbenzoate, Cyclohexancarbonsäurephenyl- oder - cyclohexylester, Phenyl- oder Cyclohexylester der Cyclohexylbenzoesäure, Phenyl- oder Cyclohexylester der Cyclohexylcyclohexancarbonsäure, Cyclohexylphenylester der Benzoesäure, der Cyclohexancarbonsäure, bzw. der Cyclohexylcyclohexancarbonsäure, Phenylcyclohexane, Cyclohexylbiphenyle, Phenylcyclohexylcyclohexane, Cyclohexylcyclohexane, Cyclohexylcyclohexylcyclohexene, 1,4-Biscyclohexylbenzole, 4',4'-Biscyclohexylbiphenyle, Phenyl- oder Cyclohexylpyrimidine, Phenyl- oder Cyclohexylpyridine, Phenyl- oder Cyclohexyldioxane, Phenyl- oder Cyclohexyl-1,3-dithiane, 1,2-Diphenylethane, 1,2-Dicyclohexylethane, 1-Phenyl-2-cyclohexylethane, 1-Cyclohexyl-2-(4-phenylcyclohexyl)-ethane, 1-Cyclohexyl-2-biphenylylethane, 1-Phenyl-2-cyclohexylphenylethane, gegebenenfalls halogenierten Stilbene, Benzylphenylether, Tolane und substituierten Zimtsäuren. Die 1,4-Phenylengruppen in diesen Verbindungen können auch ein- oder mehrfach fluoriert sein.

Die wichtigsten als weitere Bestandteile erfindungsgemäßer Medien in Frage kommenden Verbindungen lassen sich durch die Formeln (1), (2), (3), (4) und (5) charakterisieren:

R'-L-E-R" (1)

R'-L-COO-E-R" (2)

R'-L-OOC-E-R" (3)

R'-L-CH₂CH₂-E-R" (4)

R'-L-CF₂O-E-R" (5)

In den Formeln (1), (2), (3), (4) und (5) bedeuten L und E, die gleich oder verschieden sein können, jeweils unabhängig voneinander einen bivalenten Rest aus der aus -Phe-, -Cyc-, -Phe-Phe-, -Phe-Cyc-, -Cyc-Cyc-, -Pyr-, -Dio-, -G-Phe- und -G-Cyc- sowie deren Spiegelbilder gebildeten Gruppe, wobei Phe unsubstituiertes oder durch Fluor substituiertes 1,4-Phenylen, Cyc trans-1,4-Cyclohexenylen oder 1,4-Cyclohexylen, Pyr Pyrimidin-2,5-diyl oder Pyridin-2,5-diyl, Dio 1,3-Dioxan-2,5-diyl und G 2-(trans-1,4-Cyclohexyl)-ethyl, bedeuten.

Vorzugsweise ist einer der Reste L und E Cyc oder Phe. E ist vorzugsweise Cyc, Phe oder Phe-Cyc. Vorzugsweise enthalten die erfindungsgemäßen Medien eine oder mehrere Komponenten ausgewählt aus den Verbindungen der Formeln (1), (2), (3), (4) und (5), worin L und E ausgewählt sind aus der Gruppe Cyc und Phe und gleichzeitig eine oder mehrere Komponenten ausgewählt aus den Verbindungen der Formeln (1), (2), (3), (4) und (5), worin einer der Reste L und E ausgewählt ist aus der Gruppe Cyc und Phe und der andere Rest ausgewählt ist aus der Gruppe -Phe-Phe-, -Phe-Cyc-, -Cyc-Cyc-, -G-Phe- und -G-Cyc-, und gegebenenfalls eine oder mehrere Komponenten ausgewählt aus den Verbindungen der Formeln (1), (2), (3), (4) und (5), worin die Reste L und E ausgewählt sind aus der Gruppe -Phe-Cyc-, -Cyc-Cyc-, -G-Phe- und -G-Cyc-.

R' und R" bedeuten in einer kleineren Untergruppe der Verbindungen der Formeln (1), (2), (3), (4) und (5) jeweils unabhängig voneinander Alkyl, Alkenyl, Alkoxy, Alkoxyalkyl, Alkenyloxy oder Alkanoyloxy mit bis zu 8 Kohlenstoffatomen. Im Folgenden wird diese kleinere Untergruppe Gruppe A genannt und die Verbindungen werden mit den Teilformeln (1 a), (2a), (3a), (4a) und (5a) bezeichnet. Bei den meisten dieser Verbindungen sind R' und R" voneinander verschieden, wobei einer dieser Reste meist Alkyl, Alkenyl, Alkoxy oder Alkoxyalkyl ist.

In einer anderen als Gruppe B bezeichneten kleineren Untergruppe der Verbindungen der Formeln (1), (2), (3), (4) und (5) bedeutet E

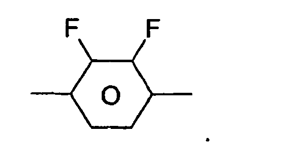

In den Verbindungen der Gruppe B, die mit den Teilformeln (1 b), (2b), (3b), (4b) und (5b) bezeichnet werden, haben R' und R" die bei den Verbindungen der Teilformeln (1a) bis (5a) angegebene Bedeutung und sind vorzugsweise Alkyl, Alkenyl, Alkoxy oder Alkoxyalkyl.

In einer weiteren kleineren Untergruppe der Verbindungen der Formeln (1), (2), (3), (4) und (5) bedeutet R", CN, F, Cl, OCF₃, OCHF₂, NCS, SCN und/oder SF₅; diese Untergruppe wird im Folgenden als Gruppe C bezeichnet und die Verbindungen dieser Untergruppe werden entsprechend mit Teilformeln (1 c), (2c), (3c), (4c) und (5c) beschrieben. In den Verbindungen der Teilformeln (1c), (2c), (3c), (4c) und (5c) hat R' die bei den Verbindungen der Teilformeln (1a), (2a), (3a), (4a) und (5a) angegebene Bedeutung und ist vorzugsweise Alkyl, Alkoxy oder Alkenyl.

Neben den bevorzugten Verbindungen der Gruppen A, B und C sind auch andere Verbindungen der Formeln (1), (2), (3), (4) und (5) mit anderen Varianten der vorgesehenen Substituenten gebräuchlich. Alle diese Substanzen sind nach literaturbekannten Methoden oder in Analogie dazu erhältlich.

Die erfindungsgemäßen Medien enthalten neben erfindungsgemäßen Verbindungen der allgemeinen Formeln (II) bis (XVII) vorzugsweise eine oder mehrere Verbindungen, welche ausgewählt werden aus der Gruppe A und/oder Gruppe B und/oder Gruppe C. Die Massenanteile der Verbindungen aus diesen Gruppen an den erfindungsgemäßen Medien sind vorzugsweise
Gruppe A: 0 bis 90 %, vorzugsweise 20 bis 90 %, insbesondere 30 bis 90 %
Gruppe B: 0 bis 80 %, vorzugsweise 10 bis 80 %, insbesondere 10 bis 70 %
Gruppe C: 0 bis 80 %, vorzugsweise 5 bis 80 %, insbesondere 5 bis 50 %
wobei die Summe der Massenanteile der in den jeweiligen erfindungsgemäßen Medien enthaltenen Verbindungen aus den Gruppen A und/oder B und/oder C vorzugsweise 5 bis 90 % und insbesondere 10 bis 90 % beträgt.

Die erfindungsgemäßen Medien enthalten vorzugsweise 1 bis 40 %, insbesondere vorzugsweise 5 bis 30 % an erfindungsgemäßen Verbindungen der allgemeinen Formeln (II) bis (XVII). Weiterhin bevorzugt sind Medien, enthaltend mehr als 40 %, insbesondere 45 bis 90 % an erfindungsgemäßen Verbindungen der allgemeinen Formeln (II) bis (XVII). Die Medien enthalten vorzugsweise drei, vier oder fünf erfindungsgemäße Verbindungen der Formeln (II) bis (XVII).

Die Verbindungen der allgemeinen Formeln (II) bis (XVII) eignen sich wegen ihrer hohen dielektrischen Anisotropie, ihrer niedrigen Rotationsviskosität γ₁, ihrer hohen Voltage Holding Ratio und ihrer sehr guten Löslichkeit in polaren Flüssigkristallmischungen für eine Verwendung in TFT-Flüssigkristalldisplays. Die Verbindungen weisen eine hohe Tieftemperaturstabilität (nur Glaspunkt) und eine sehr hohe chemische Stabilität auf. Gegenüber ihren CF₂O-verbrückten Analoga zeigen die erfindungsgemäßen CHFO-verbrückten flüssigkristallinen Verbindungen signifikant niedrigere Schmelzenthalpien, was eine verbesserte Tieftemperaturstabilität von auf ihnen basierenden Mischungen zur Folge hat. Sie sind daher in besonders hohem Maße zur Herstellung polarer Mischungen für Aktiv-Matrix-LCDs geeignet, die bei niedrigen Temperaturen zum Einsatz kommen, beispielsweise im Automobilbereich.

Gegenstand der Erfindung ist daher auch eine elektrooptische Flüssigkristallanzeige, enthaltend ein erfindungsgemäßes flüssigkristallines Medium.

Die Gesamtmenge an Verbindungen der Formeln II bis XVII in den erfindungsgemäßen Gemischen ist nicht kritisch. Die Gemische können daher eine oder mehrere weitere Komponenten enthalten zwecks Optimierung verschiedener Eigenschaften. Der beobachtete Effekt auf die Ansprechzeiten und die Schwellenspannung ist jedoch in der Regel umso größer je höher die Gesamtkonzentration an Verbindungen der Formeln 11 bis XVII ist.

Die erfindungsgemäßen Mischungen mit niedriger optischer Anisotropie (Δn < 0,07) sind insbesondere für reflektive Displays geeignet. Low Vₜₕ-Mischungen, sind insbesondere für 2,5 V-, 3,3 V-Treiber und 4V- oder 5V-Treiber geeignet. Für letztere Anwendungen sind Ester-freie Mischungen bevorzugt.

Der Aufbau der erfindungsgemäßen MFK-Anzeige aus Polarisatoren, Elektrodengrundplatten und Elektroden mit Oberflächenbehandlung entspricht der für derartige Anzeigen üblichen Bauweise. Dabei ist der Begriff der üblichen Bauweise hier weit gefasst und umfasst auch alle Abwandlungen und Modifikationen der MFK-Anzeige, insbesondere auch Matrix-Anzeigeelemente auf Basis poly-Si TFT oder MIM.

Ein wesentlicher Unterschied der erfindungsgemäßen Anzeigen zu den bisher üblichen auf der Basis der verdrillten nematischen Zelle besteht jedoch in der Wahl der Flüssigkristallparameter der Flüssigkristallschicht.

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebene Zusätze, wie z. B. UV-Absorber, Antioxidantien, Radikalfänger, enthalten. Beispielsweise können 0-15 % pleochroitische Farbstoffe, Stabilisatoren oder chirale Dotierstoffe zugesetzt werden.

C bedeutet eine kristalline, S eine smektische, S_{C} eine smektische C, N eine nematische und I die isotrope Phase.

V₁₀ bezeichnet die Spannung für 10 % Transmission (Blickrichtung senkrecht zur Plattenoberfläche). tₒₙ bezeichnet die Einschaltzeit und t_{off} die Ausschaltzeit bei einer Betriebsspannung entsprechend dem 2-fachen Wert von V₁₀. Δn bezeichnet die optische Anisotropie und nₒ den Brechungsindex. Δε bezeichnet die dielektrische Anisotropie (Δε = ε_{∥} - ε_{┴}, wobei ε_{∥} die Dielektrizitätskonstante parallel zu den Moleküllängsachsen und ε_{┴} die Dielektrizitätskonstante senkrecht dazu bedeutet). Die elektrooptischen Daten wurden in einer TN-Zelle im 1. Minimum (d.h. bei einem d · Δn-Wert von 0,5 µm) bei 20 °C gemessen, sofern nicht ausdrücklich etwas anderes angegeben wird. Die optischen Daten wurden bei 20 °C gemessen, sofern nicht ausdrücklich etwas anderes angegeben wird.

In der vorliegenden Anmeldung und in den folgenden Beispielen sind die Strukturen der Flüssigkristallverbindungen durch Acronyme angegeben, wobei die Transformation in chemische Formeln gemäß folgender Tabellen A und B erfolgt. Alle Reste CₙH₂ₙ₊₁ und CₘH₂ₘ₊₁ sind geradkettige Alkylreste mit n bzw. m C-Atomen. n und m bedeuten jeweils unabhängig voneinander 1, 2, 3, 4, 5, 6, 7, 8, 9, 10, 11, 12, 13, 14 oder 15.

Die Codierung gemäß Tabelle B versteht sich von selbst. In Tabelle A ist nur das Acronym für den Grundkörper angegeben. Im Einzelfall folgt getrennt vom Acronym für den Grundkörper mit einem Strich ein Code für die Substituenten R¹, R², L¹ und L²:

| Code für R¹, R², L¹, L² | R¹ | R² | L¹ | L² |
|---|---|---|---|---|
| nm | CₙH₂ₙ₊₁ | CₘH₂ₘ₊₁ | H | H |
| nOm | CₙH₂ₙ₊₁ | OCₘH₂ₘ₊₁ | H | H |
| nO.m | OCₙH₂ₙ₊₁ | CₘH₂ₘ₊₁ | H | H |
| n | CₙH₂ₙ₊₁ | CN | H | H |
| nN.F | CₙH₂ₙ₊₁ | CN | H | F |
| nF | CₙH₂ₙ₊₁ | F | H | H |
| nOF | OCₙH₂ₙ₊₁ | F | H | H |
| nCl | CₙH₂ₙ₊₁ | Cl | H | H |
| nF.F | CₙH₂ₙ₊₁ | F | H | F |
| nF.F.F | CₙH₂ₙ₊₁ | F | F | F |
| nCF₃ | CₙH₂ₙ₊₁ | CF₃ | H | H |
| nOCF₃ | CₙH₂ₙ₊₁ | OCF₃ | H | H |
| nOCF₂ | CₙH₂ₙ₊₁ | OCHF₂ | H | H |
| nS | CₙH₂ₙ₊₁ | NCS | H | H |
| rVsN | CᵣH₂ᵣ₊₁-CH=CH-CₛH₂ₛ- | CN | H | H |
| rEsN | CᵣH₂ᵣ₊₁-O-C₂H₂ₛ- | CN | H | H |
| nAm | CₙH₂ₙ₊₁ | COOCₘH₂ₘ₊₁ | H | H |
| rl0CCF₂.F.F | CₙH₂ₙ₊₁ | OCH₂CF₂H | F | F |

Bevorzugte Mischungskomponenten finden sich in den Tabellen A und B.

**Tabelle A:**

| | |
|---|---|
| 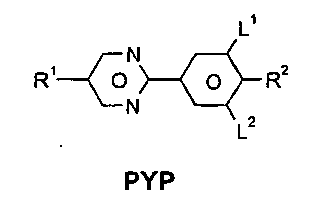 | 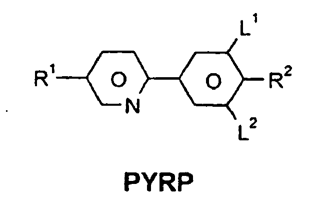 |
| 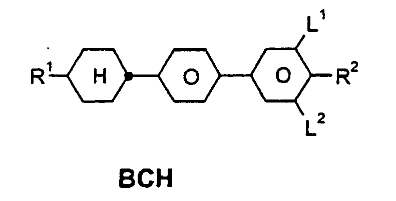 | 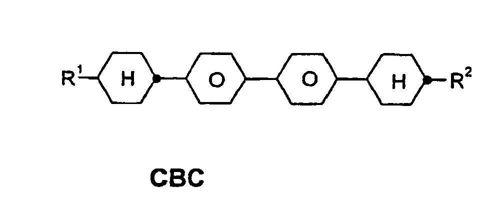 |
| 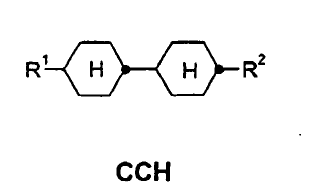 | 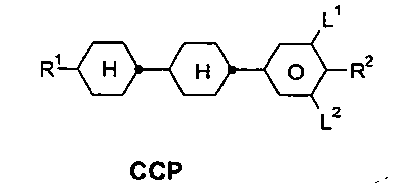 |
| 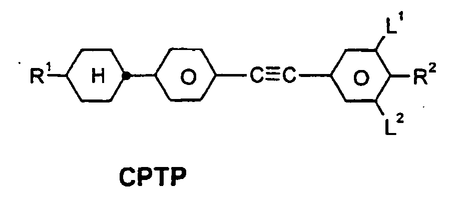 | |
| 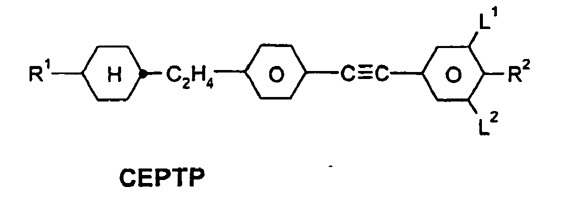 | |
| 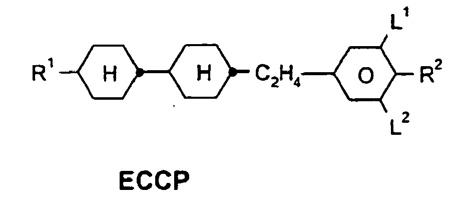 | 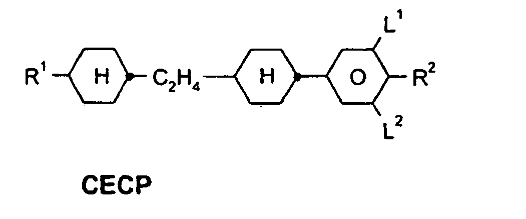 |
| 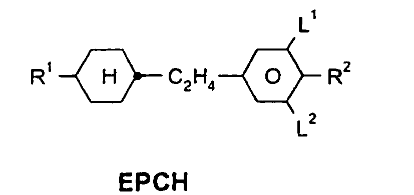 | 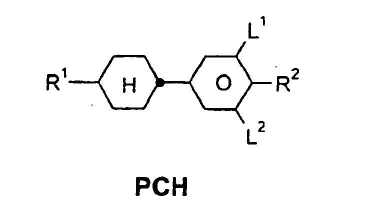 |
| 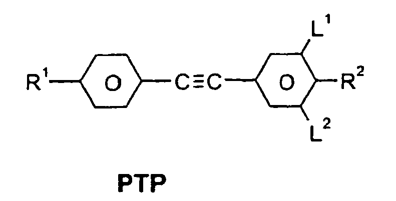 | 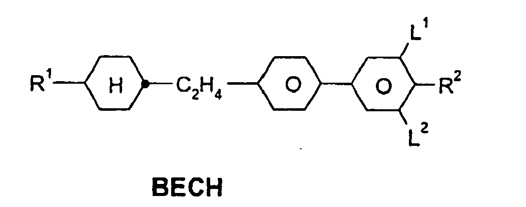 |
| 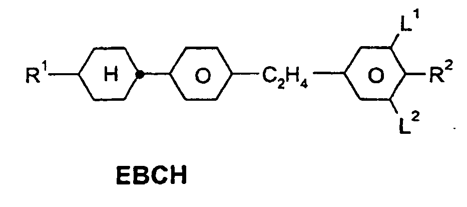 | 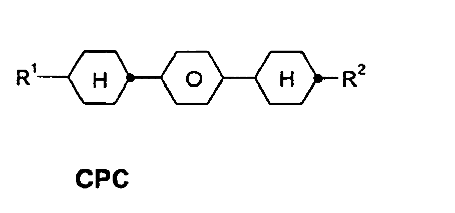 |
| 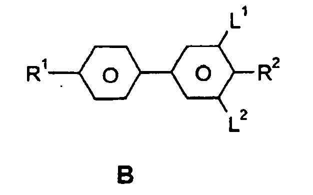 | 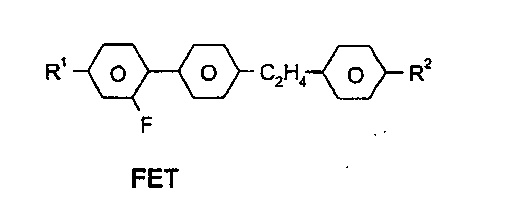 |
| 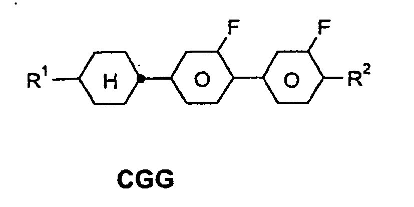 | 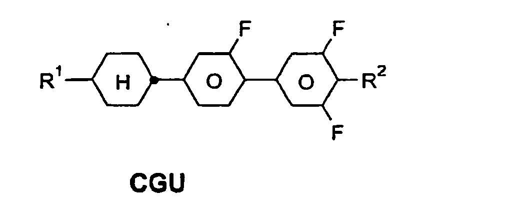 |
| 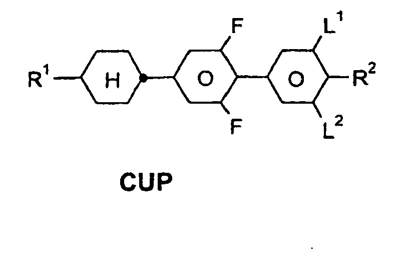 | 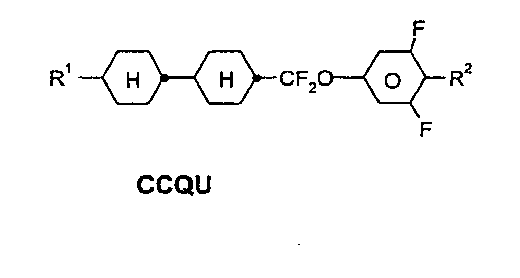 |
| 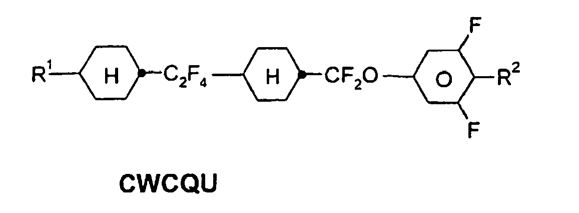 | |
| 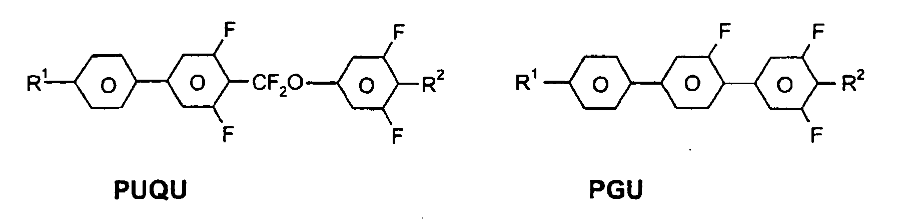 | |

**Tabelle B:**

| |
|---|
| 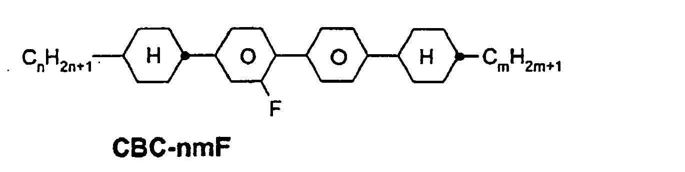 |
| 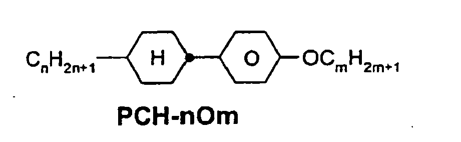 |
| 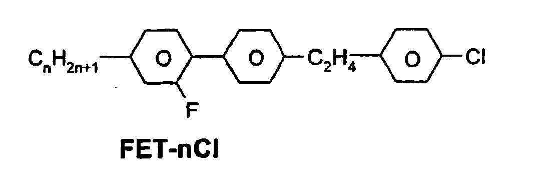 |
| 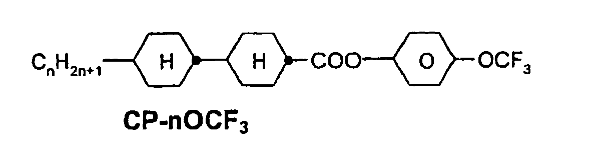 |
| 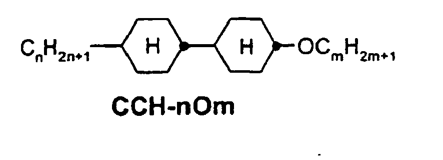 |
| 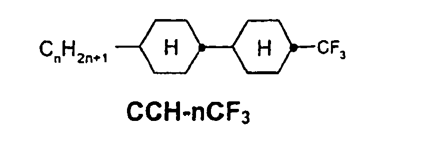 |
| 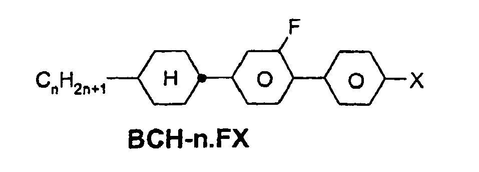 |
| 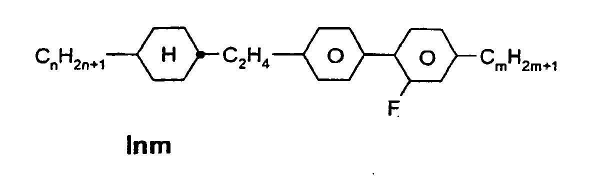 |
| 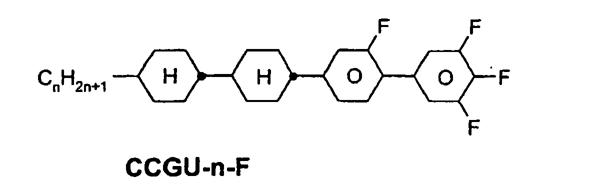 |
| 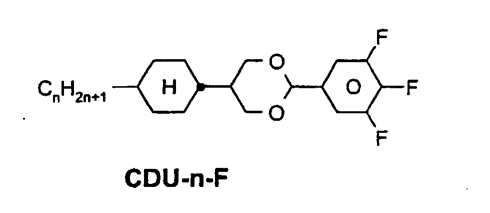 |
| 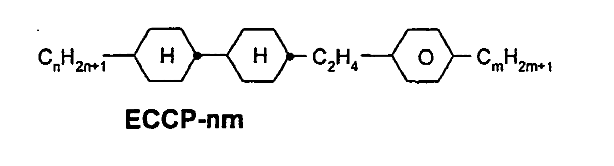 |
| 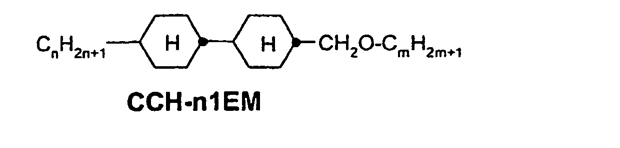 |
| 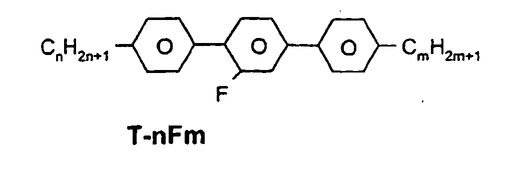 |
| 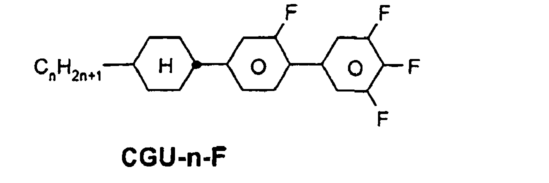 |
| 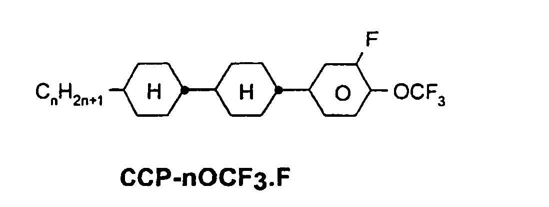 |
| 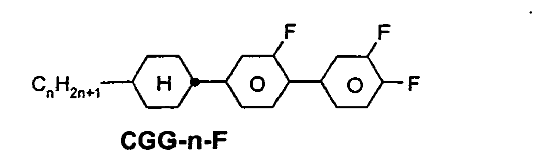 |
| 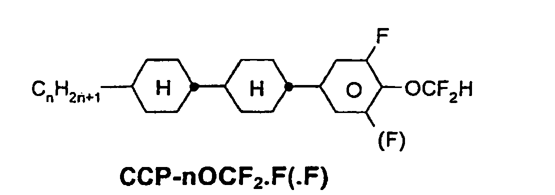 |
| 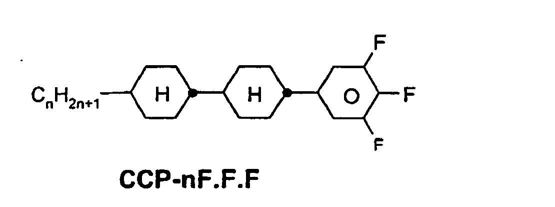 |
| 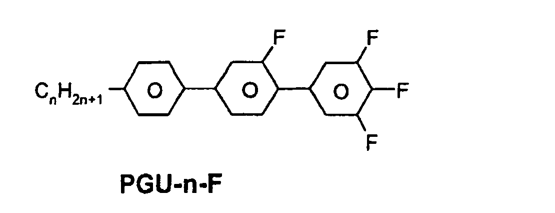 |
| 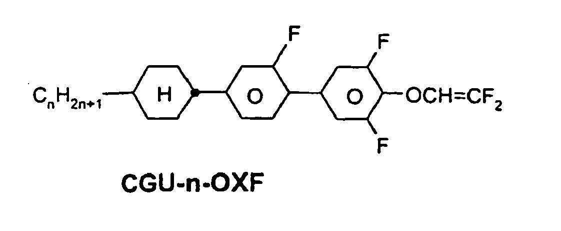 |
| 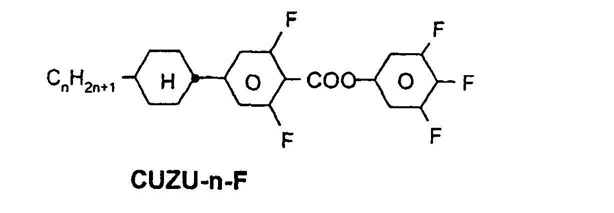 |
| 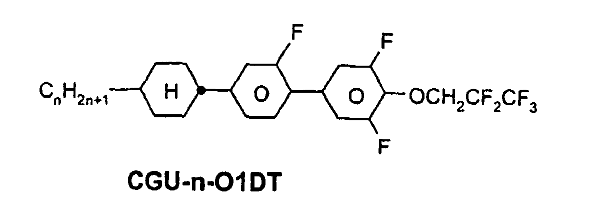 |
| 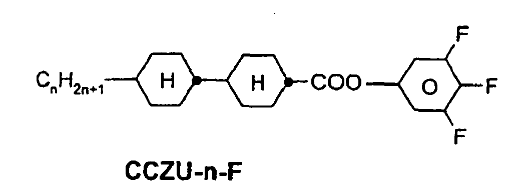 |
| 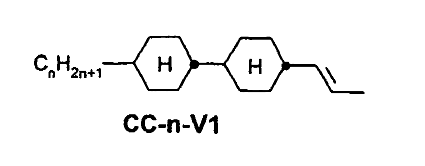 |
| 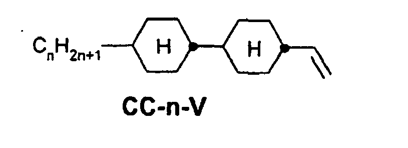 |
| 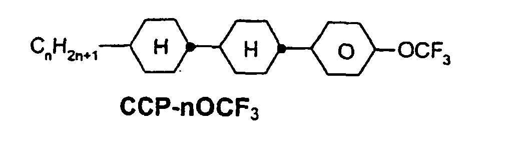 |
| 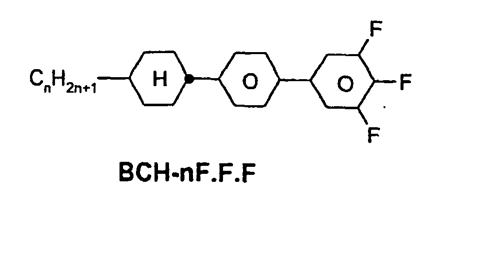 |
| 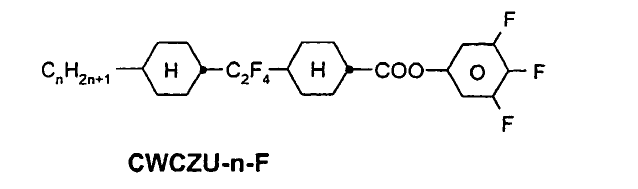 |
| 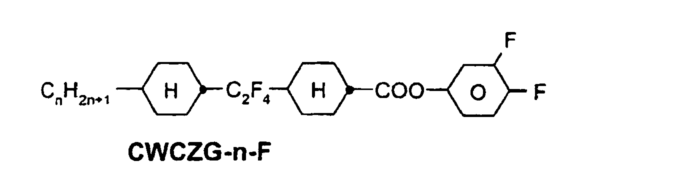 |
| 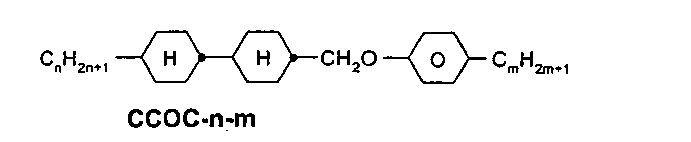 |
| 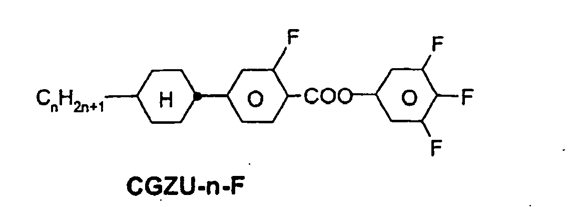 |
| 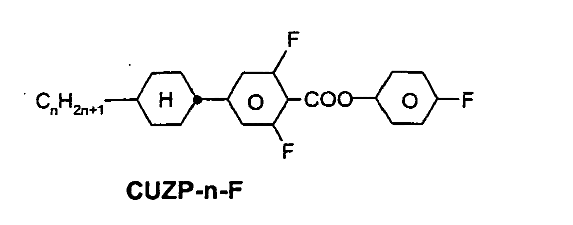 |
| 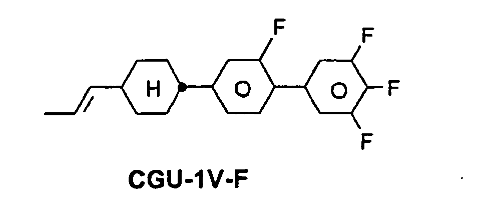 |
| 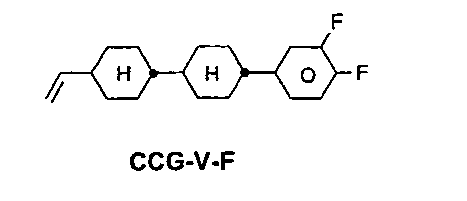 |
| 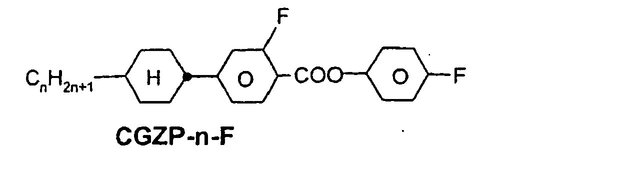 |
| 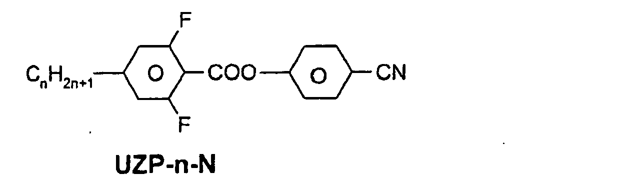 |
| 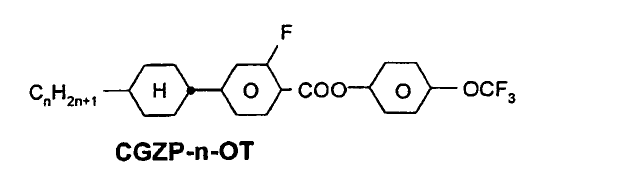 |
| 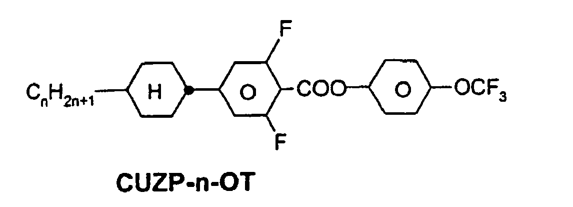 |
| 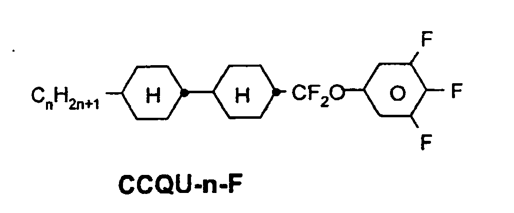 |
| 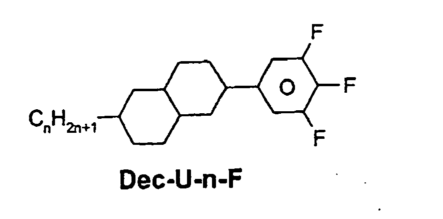 |
| 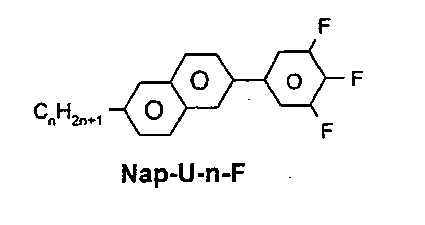 |
| 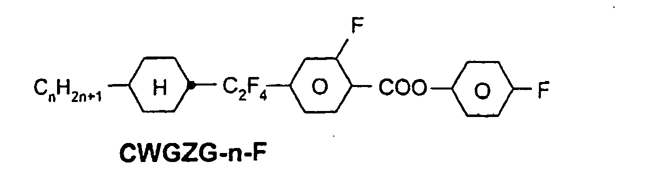 |
| 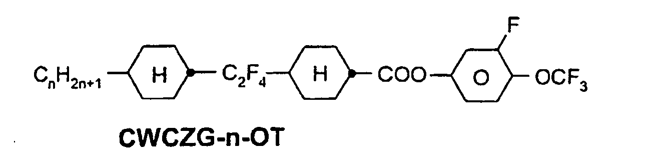 |
| 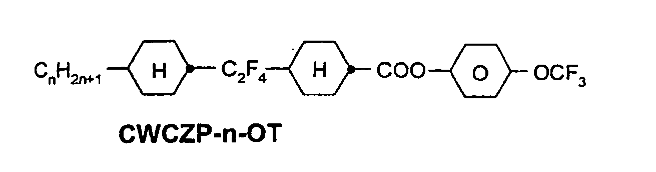 |
| 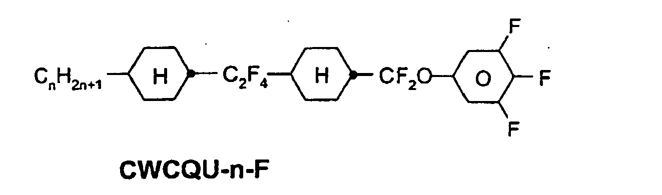 |
| 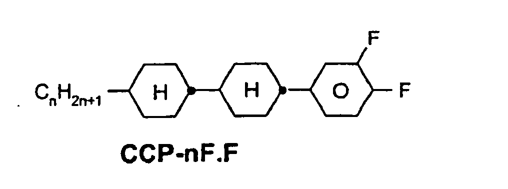 |
| 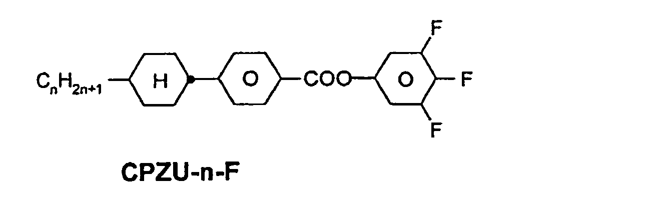 |
| 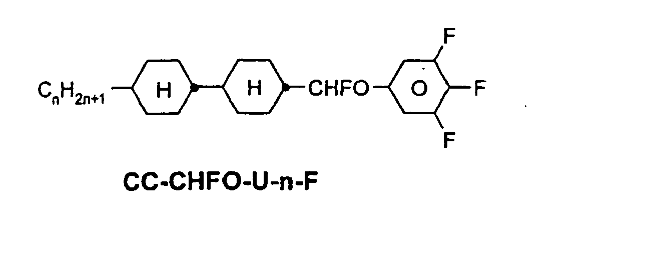 |
| 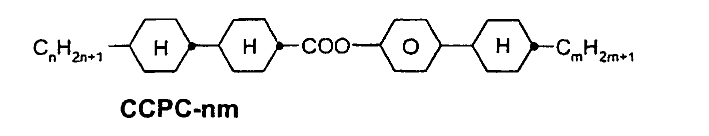 |
| 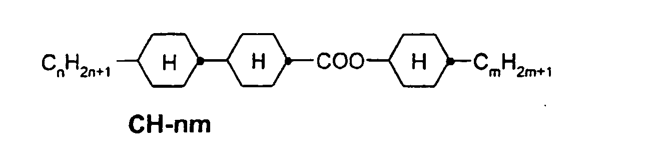 |

**Tabelle C:**

| | |
|---|---|
| In der Tabelle C werden mögliche Dotierstoffe angegeben, die in der Regel den erfindungsgemäßen Mischungen zugesetzt werden. | |
| 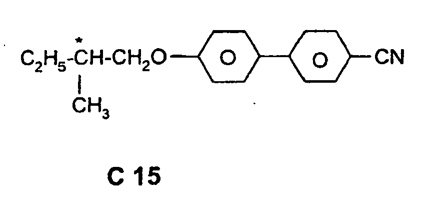 | 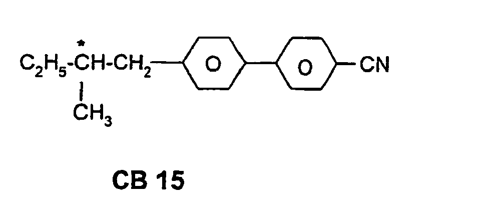 |
| 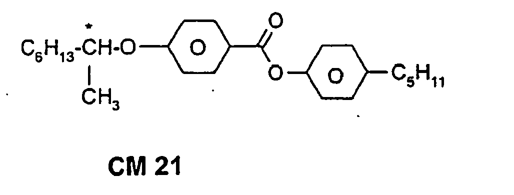 | |
| 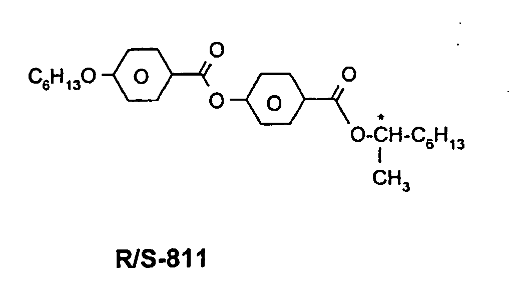 | |
| 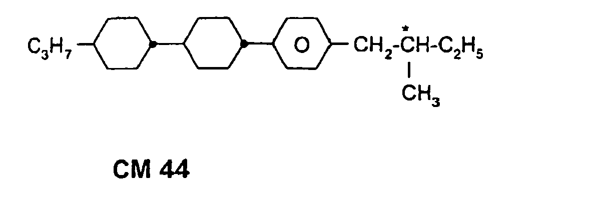 | |
| 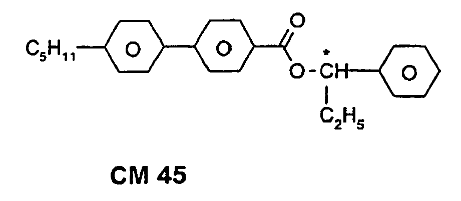 | 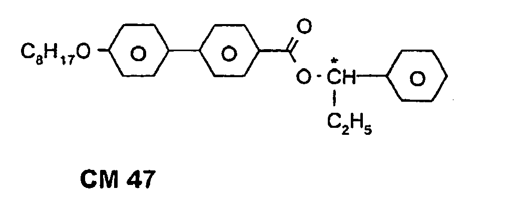 |
| 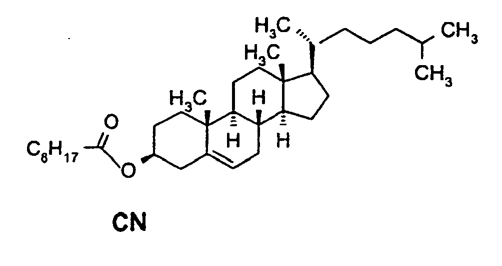 | |
| 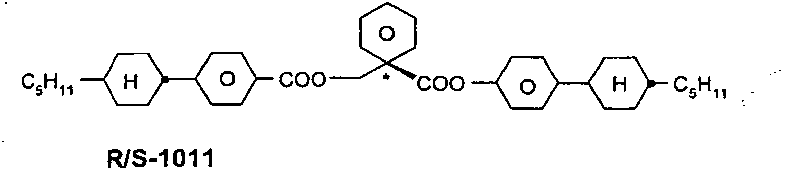 | |
| 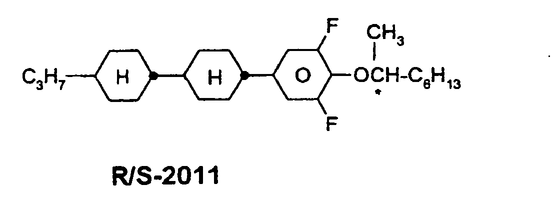 | |
| 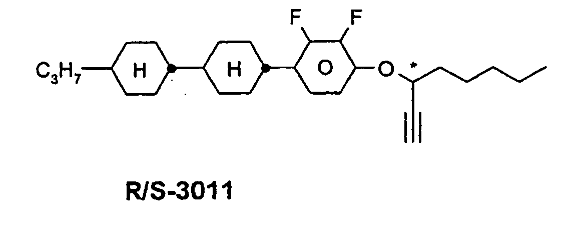 | |
| 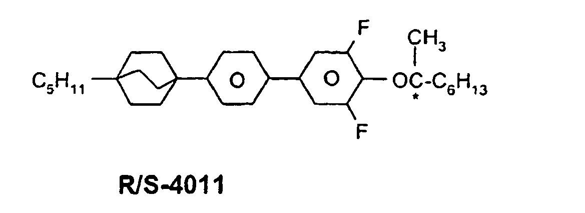 | |
| 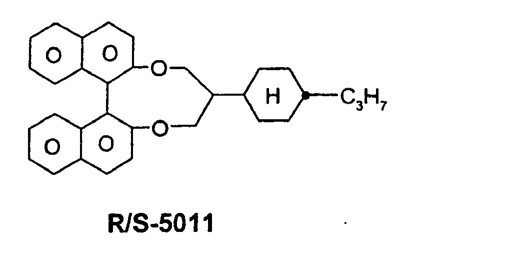 | |

**Tabelle D**

| | |
|---|---|
| Stabilisatoren, die beispielsweise den erfindungsgemäßen Mischungen zugesetzt werden können, werden nachfolgend genannt. (n = 1-12) | |
| 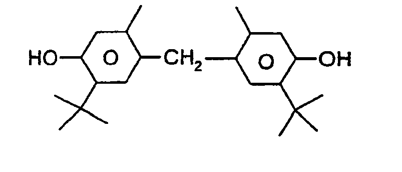 | 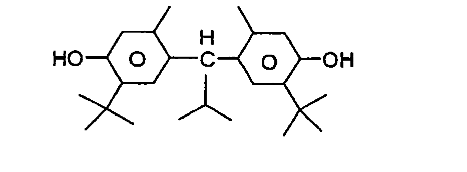 |
| 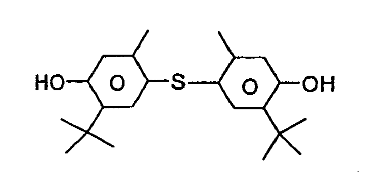 | 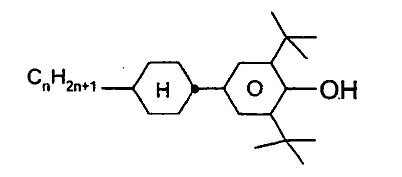 |
| 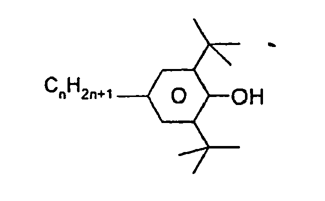 | 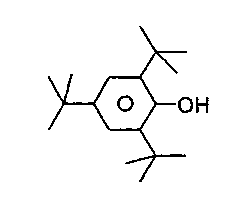 |
| 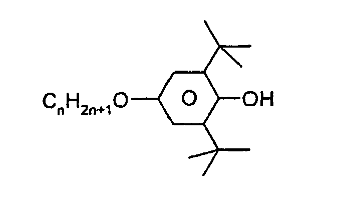 | 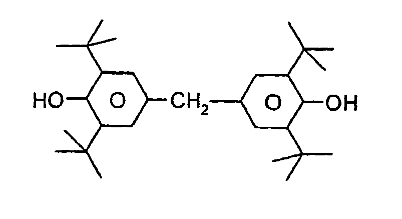 |
| 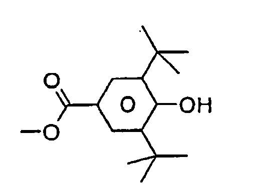 | 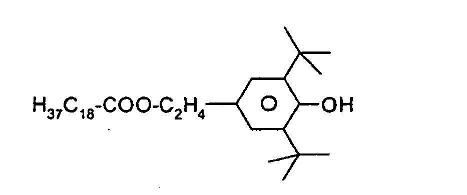 |
| 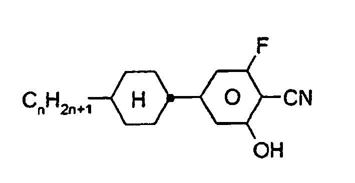 | |
| 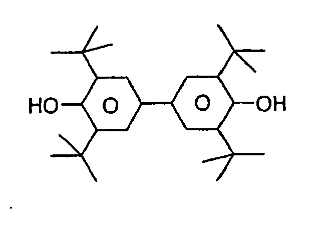 | 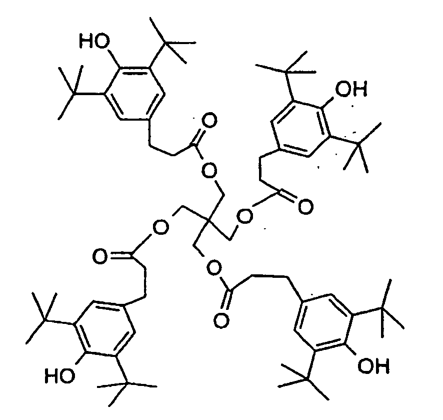 |
| 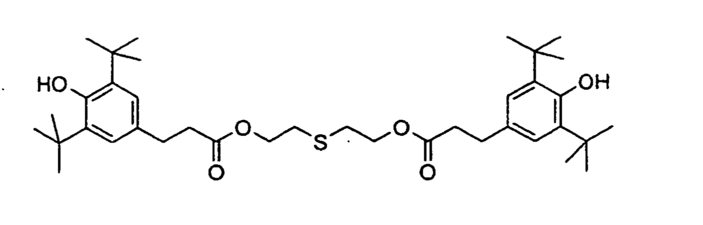 | |
| 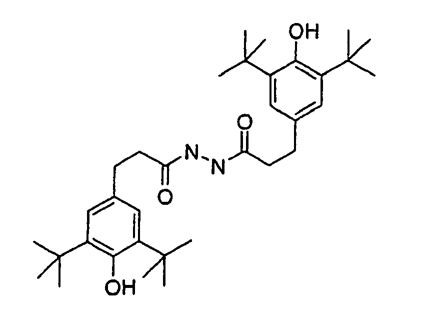 | 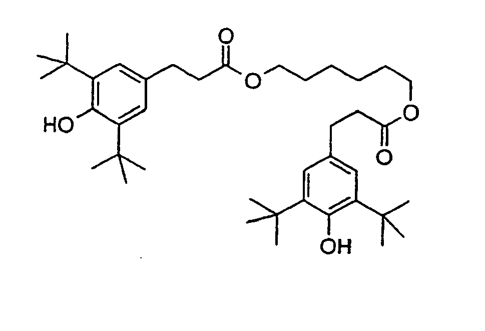 |
| 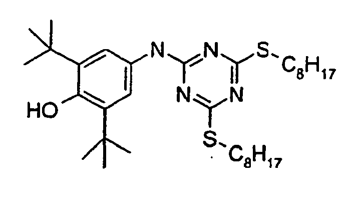 | 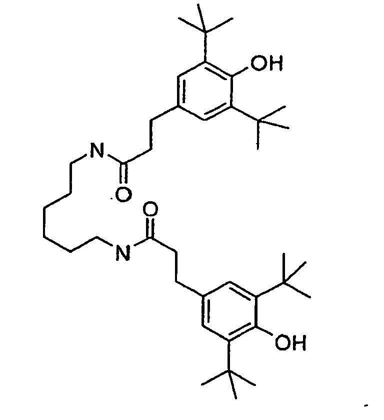 |
| 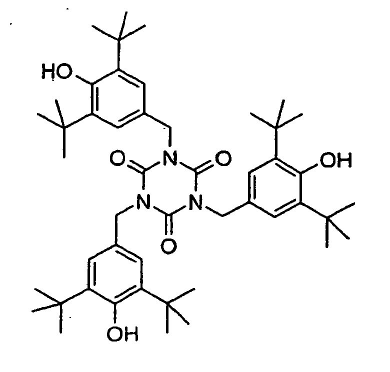 | 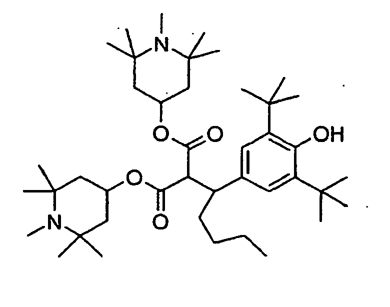 |
| 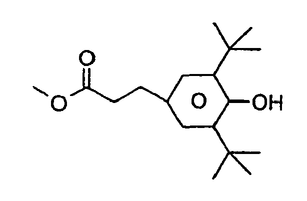 | 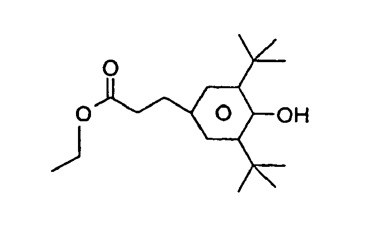 |
| 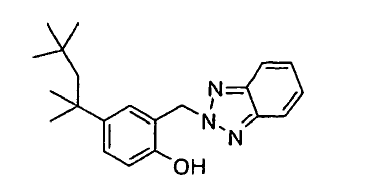 | 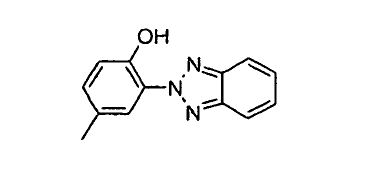 |
| 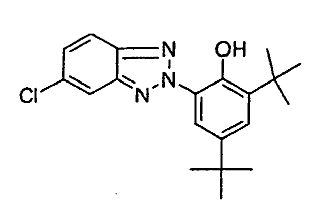 | 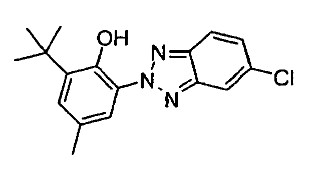 |
| 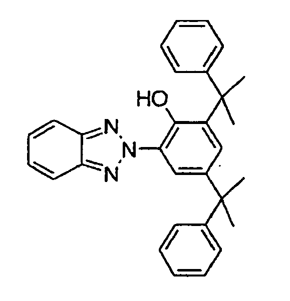 | 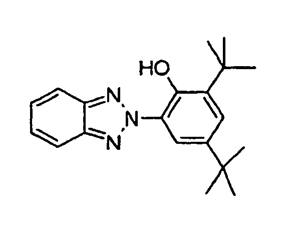 |
| 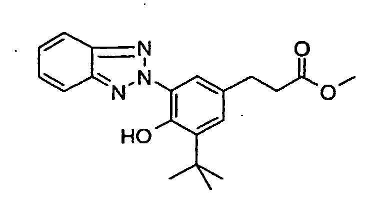 | 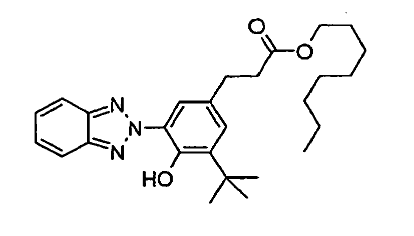 |
| 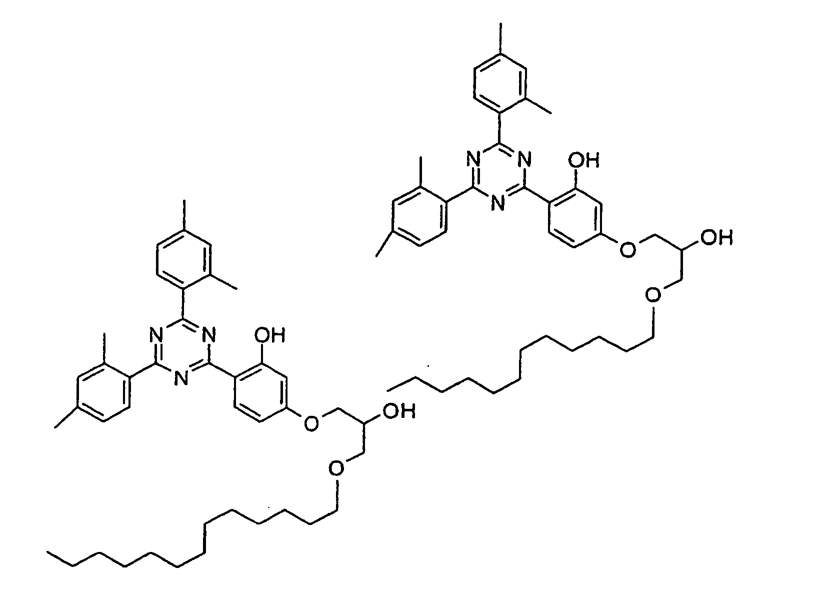 | |
| 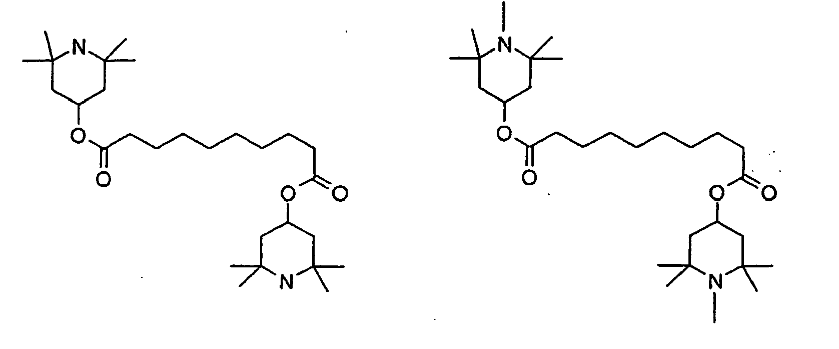 | |

Die folgenden Beispiele sollen die Erfindung erläutern, ohne sie zu begrenzen. Vor- und nachstehend bedeuten Prozentangaben Gewichtsprozent. Alle Temperaturen sind in Grad Celsius angegeben. Fp. bedeutet Schmelzpunkt, Kp. Klärpunkt. Ferner bedeuten K = kristalliner Zustand, N = nematische Phase, S = smektische Phase und I = isotrope Phase. Die Angaben zwischen diesen Symbolen stellen die Übergangstemperaturen dar. Δn bedeutet optische Anisotropie (589 nm, 20 °C), die Fließviskosität ν₂₀ (mm²/sec) wurde bei 20 °C bestimmt. Die Rotationsviskosität γ₁ (mPa·s) wurde ebenfalls bei 20 °C bestimmt.

"Übliche Aufarbeitung" bedeutet: man gibt gegebenenfalls Wasser hinzu, extrahiert mit Dichlormethan, Diethylether, Methyl-tert. Butylether oder Toluol, trennt ab, trocknet die organische Phase, dampft ein und reinigt das Produkt durch Destillation unter reduziertem Druck oder Kristallisation und/oder Chromatographie. Folgen Äbkürzungen werden verwendet:
- n-BuLi: 1,6 molare Lösung von n-Butyllithium in n-Hexan
- THF: Tetrahydrofuran
- RT: Raumtemperatur 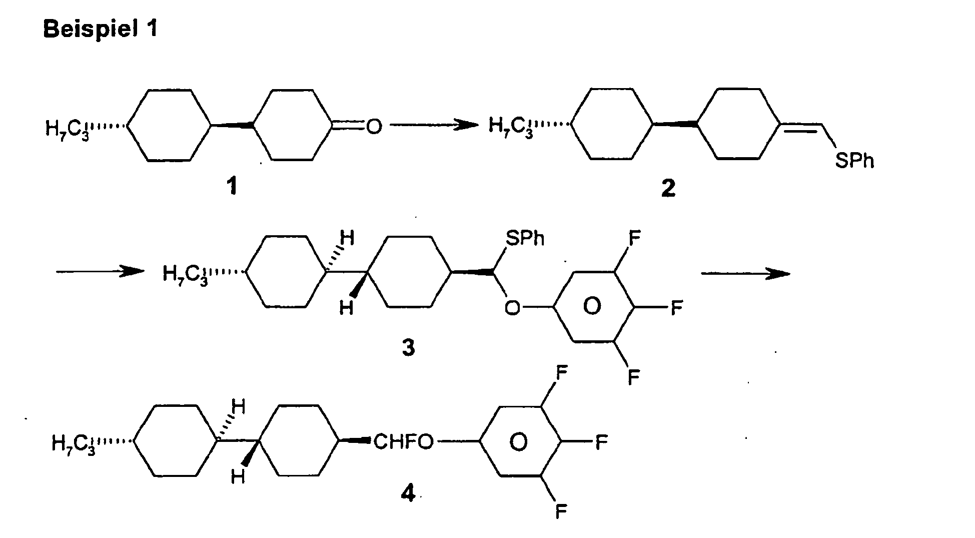
**2:** Eine Lösung von 100 mmol **1** und 100 mmol Triphenyl(phenylthiomethyl)phosphoniumbromid in 300 ml THF wird bei -10°C mit 100 mmol KOtBu versetzt. Man lässt auf Raumtemperatur kommen, rührt 18 h und arbeitet wie üblich wässrig auf. Das Rohprodukt wird chromatographisch gereinigt.
Ausbeute: 83 % **2**.
**3:** Eine Lösung von 80 mmol **2** in 200 ml CH₂Cl₂ wird bei -70°C tropfenweise mit 80 mmol CF₃SO₃H versetzt. Dann gibt man tropfenweise eine Lösung von 80 mmol 2,4,5-Trifluorphenol und 80 mmol Triethylamin in 100 ml CH₂Cl₂ zu. Man lässt auf Raumtemperatur kommen und arbeitet wie üblich wässrig auf. Das Rohprodukt wird chromatographisch gereinigt. Ausbeute: 75 % **3**.
**4:** Eine Lösung von 30 mmol **3** in 100 ml CH₂Cl₂ wird bei -70°C zuerst mit 150 mmol NEt₃ · 3HF, dann mit 150 mmol DBH (5,5-Dimethyl-1,3-dibromhydanthoin) versetzt. Man lässt auf Raumtemperatur kommen und arbeitet alkalisch wässrig auf. Das Produkt wird chromatographisch gereinigt.
- Ausbeute:: 23 % **4**. Phasen: K 43 N 88 I; Δn = 0,0620; Δε = 7,7 Schmelzenthalpie ΔH = 5100 kJ/mol (zum Vergleich CF₂O-Analoga: ΔH = 6400 kJ/mol). 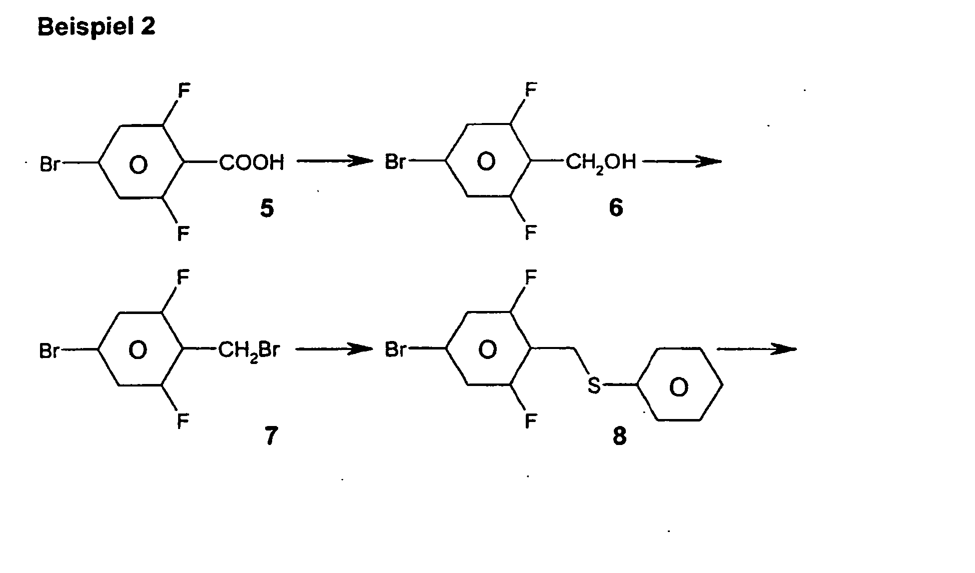 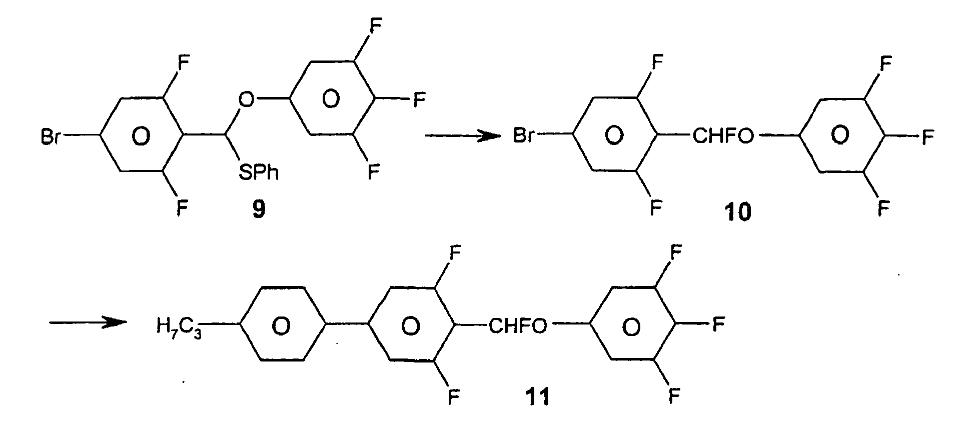
**6:** Eine Lösung von 200 mmol **5** in 500 ml THF wird unter Zusatz von 60 mmol LiAlH₄ 1 h zum Sieden erhitzt. Man hydrolysiert vorsichtig und arbeitet wie üblich wässrig auf.
Ausbeute: 93 % **6**.
**7:** Eine Lösung von 150 mmol **6** und 150 mmol PBr₃ in 500 ml Toluol wird für 6 h zum Sieden erhitzt. Man arbeitet wie üblich wässrig auf. Das Produkt wird destilliert.
Ausbeute: 63 % **7**.
**8:** Eine Mischung von 100 mmol **8** und 105 mmol Natrium-Thiophenolat in 300 ml DMF wird 18 h bei 50°C gerührt. Man arbeitet wie üblich wässrig auf und reinigt das Rohprodukt durch Chromatographie.
Ausbeute: 86 % **8**.
**9:** Eine Lösung von 80 mmol **8** in 200 ml CH₂Cl₂ wird bei 0°C tropfenweise mit 80 mmol SO₂Cl₂ versetzt. Man rührt 15 min und tropft dann eine Lösung von 80 mmol 3,4,5-Trifluorphenol und 90 mmol Triethylamin in 200 ml CH₂Cl₂ zu. Die Mischung wird 18 h bei Raumtemperatur gerührt und dann wie üblich wässrig aufgearbeitet. Man reinigt das Rohprodukt durch Chromatographie.
Ausbeute: 67 % **9**.
**10:** Eine Lösung von 40 mmol **9** in 80 ml CH₂Cl₂ wird bei -70°C zuerst mit 200 mmol NEt₃. 3HF, dann mit 200 mmol DBH (5,5-Dimethyl-1,3-dibromhydanthoin) versetzt. Man lässt auf Raumtemperatur kommen und arbeitet alkalisch wässrig auf. Das Produkt wird chromatographisch gereinigt.
Ausbeute: 34 % **10**.
**11:** Eine Lösung von 10 mmol **10**, 10 mmol 4-Propylbenzolboronsäure, 10 mmol Natriummetaborat-Octahydrat, 0,4 mmol Pd(PPh₃)₂Cl₂ und 3,7 mmol Hydrazinhydrat in 60 ml THF und 20 ml Waser wird 5 h zum Rückfluss erhitzt. Die Aufarbeitung erfolgt wie üblich. Das Rohprodukt wird zuerst über eine Fritte (Kieselgel; *n*-Heptan/MTB-Ether 9 : 1) filtriert und dann aus *n*-Heptan umkristallisiert.
Ausbeute: 58 % **11**. 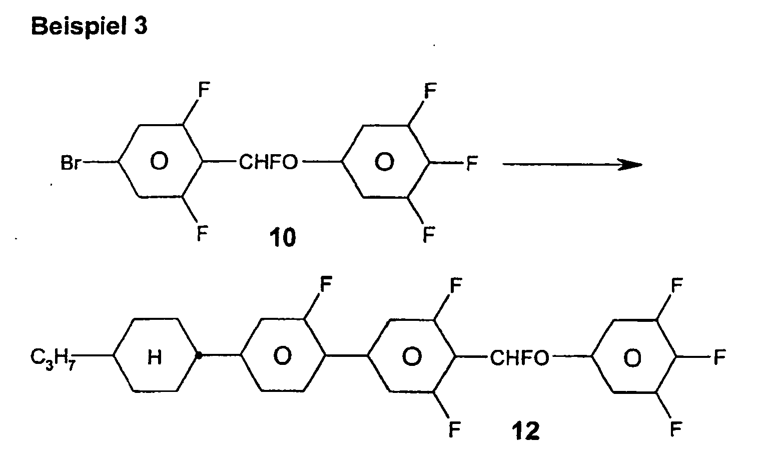 **12:** Eine Lösung von 10 mmol **10**, 10 mmol 4-(4-Propylcyclohexyl)benzolboronsäure, 10 mmol Natriummetaborat-Octahydrat, 0,4 mmol Pd(PPh₃)₂Cl₂ und 3,7 mmol Hydrazinhydrat in 60 ml THF und 20 ml Wasser wird 5 h zum Rückfluss erhitzt. Die Aufarbeitung erfolgt wie üblich. Das Rohprodukt wird zuerst über eine Fritte (Kieselgel; *n*-Heptan/MTB-Ether
9 : 1) filtriert und dann aus *n*-Heptan umkristallisiert.
Ausbeute: 62 % **12**

### Mischungsbeispiele

| Beispiel M1 | | | |
|---|---|---|---|
| CCP-1F.F.F | 10,00 % | Klärpunkt [°C]: | 84,0 |
| CCP-2F.F.F | 9,00 % | Δε [1 kHz, 20 °C]: | 10,4 |
| CCP-3F.F.F | 8,00 % | γ₁ [mPa·s, 20°C]: | 162 |
| CC-CHFO-U-3-F | 10,00 % | | |
| CCP-20CF₃.F | 3,00 % | | |
| CCP-30CF₃.F | 12,00 % | | |
| CCP-20CF₃ | 8,00 % | | |
| CCP-30CF₃ | 8,00 % | | |
| CCP-40CF₃ | 6,00 % | | |
| CGU-2-F | 10,00 % | | |
| PGU-2-F | 7,00 % | | |
| CCGU-3-F | 5,00 % | | |
| CC-3-V1 | 2,00 % | | |
| CCH-35 | 2,00 % | | |

| Beispiel M2 | |
|---|---|
| CCH-301 | 12,60 % |
| CCH-3CF₃ | 7,20 % |
| CCH-501 | 9,90 % |
| CCP-2F.F.F | 9,00 % |
| CCP-3F.F.F | 11,70 % |
| CCP-5F.F.F | 4,50 % |
| CCPC-33 | 2,70 % |
| CCZU-2-F | 4,50 % |
| CCZU-3-F | 15,30 % |
| CCZU-5-F | 4,50 % |
| CH-33 | 2,70 % |
| CH-35 | 2,70 % |
| CH-43 | 2,70 % |
| CC-CHFO-U-3-F | 10,00 % |

| Beispiel M3 | | | |
|---|---|---|---|
| BCH-3F.F | 10,80 % | Klärpunkt [°C]: | 90,9 |
| BCH-5F.F | 9,00 % | Δn [589 nm, 20 °C]: | 0,0935 |
| ECCP-30CF₃ | 4,50 % | Δε [1 kHz, 20 °C]: | 5,6 |
| ECCP-50CF₃ | 4,50 % | | |
| CBC-33F | 1,80 % | | |
| CBC-53F | 1,80 % | | |
| CBC-55F | 1,80 % | | |
| PCH-6F | 7,20 % | | |
| PCH-7F | 5,40 % | | |
| CCP-20CF₃ | 7,20 % | | |
| CCP-30CF₃ | 10,80 % | | |
| CCP-40CF₃ | 6,30 % | | |
| CCP-50CF₃ | 9,90 % | | |
| PCH-5F | 9,00 % | | |
| CC-CHFO-U-3-F | 10,00 % | | |

## Patentansprüche

1. Flüssigkristalline Verbindungen der allgemeinen Formeln (II) oder (III)
R-Aₙ-Z¹-A-X (II)
R-A-Z¹-A-Z²-Aₘ-X (III)
worin
A jeweils unabhängig voneinander 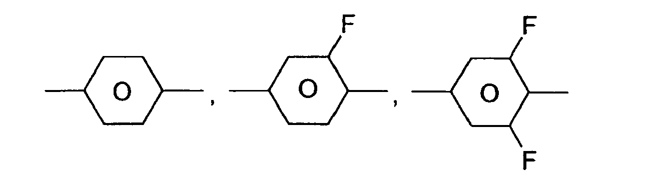 oder 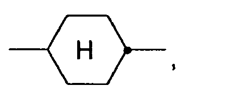
Z¹ -CHF-O-,
Z² eine Einfachbindung oder -CO-O-,
X -F, -Cl, -CN, -CF₃, -OCF₃ oder -OCHF₂,
R Wasserstoff, einen unsubstituierten oder ein- oder mehrfach durch Fluor substituierten linearen oder verzweigten Alkyl-, Alkoxy-, Alkenyloxy oder Alkenylrest mit 1 bis 10 bzw. 2 bis 10 C-Atomen, worin eine oder mehrere CH₂-Gruppen durch -O- ersetzt sein können,
n 1, 2 oder 3,
m 1 oder 2
sind.

2. Flüssigkristalline Verbindungen nach Anspruch 1 der allgemeinen Formeln (VI)- (XV) 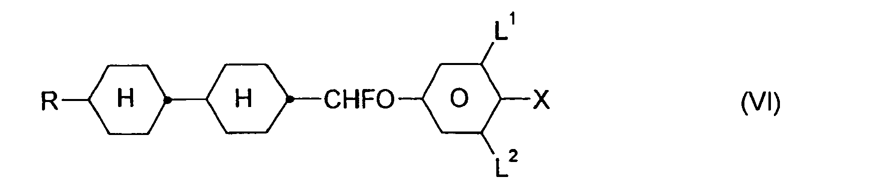 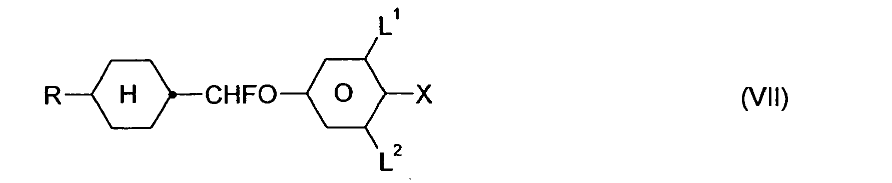 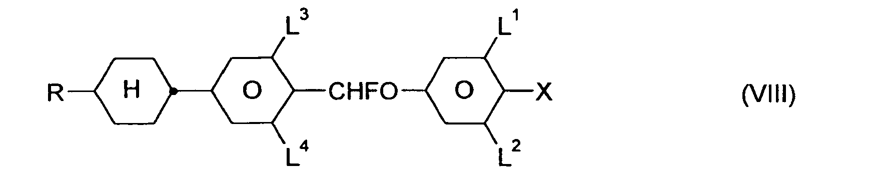 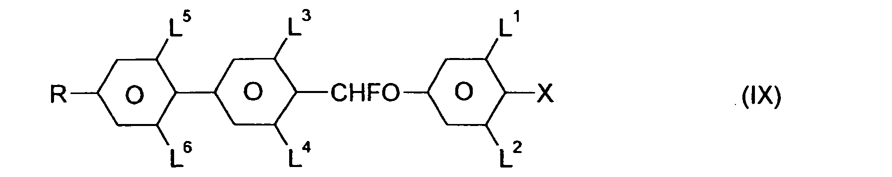 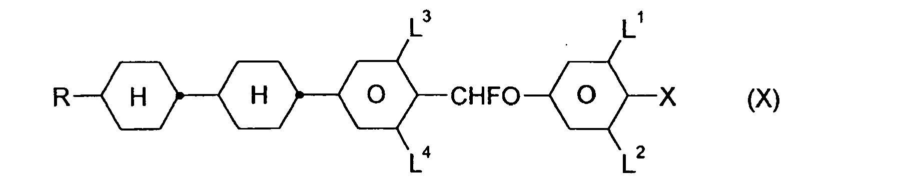 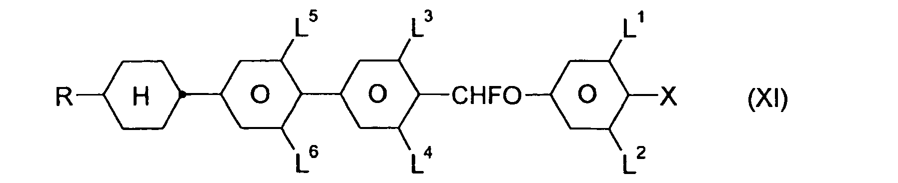 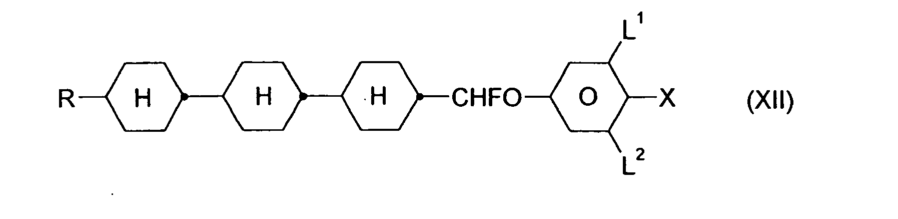 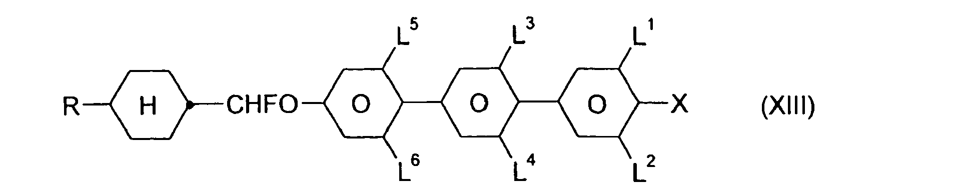 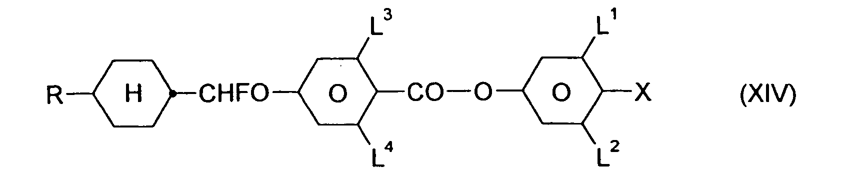 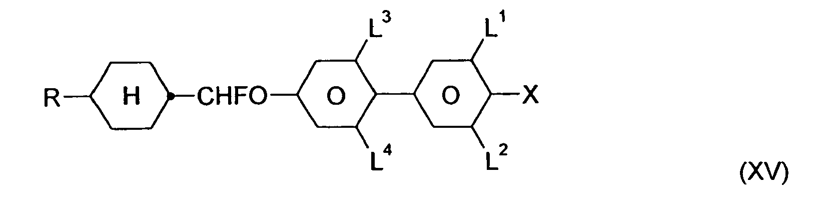 worin
L¹⁻⁶ jeweils unabhängig voneinander H oder F sind.

3. Flüssigkristallines Medium aus mindestens zwei flüssigkristallinen Verbindungen, enthaltend mindestens eine flüssigkristalline Verbindung nach Anspruch 1 oder 2.

4. Elektrooptische Flüssigkristallanzeige, umfassend ein flüssigkristallines Medium nach Anspruch 3.

## Claims

1. Liquid-crystalline compounds of the general formula (II) or (III)
R-Aₙ-Z¹-A-X (II)
R-A-Z¹-A-Z²-Aₘ-X (III)
in which
A is in each case, independently of one another, 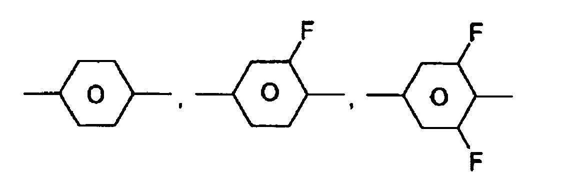 or 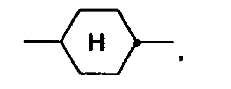
Z¹ is -C H F-O-,
Z² is a single bond or -CO-O-,
X is -F, -Cl, -CN, -CF₃, -OCF₃ or -OCHF₂,
R is hydrogen, an unsubstituted or mono- or poly-fluorine-substituted linear or branched alkyl, alkoxy, alkenyloxy or alkenyl radical having 1 to 10 or 2 to 10 C atoms respectively, in which one or more CH₂ groups may be replaced by -O-,
n is 1, 2 or 3,
m is 1 or 2.

2. Liquid-crystalline compounds according to Claim 1 of the general formulae (VI) - (XV) 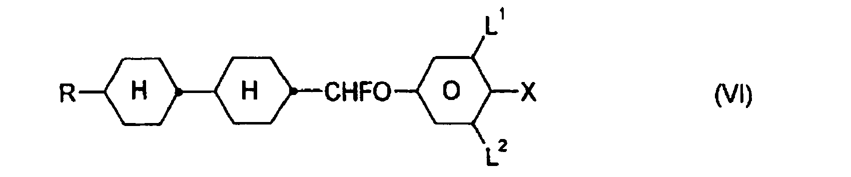 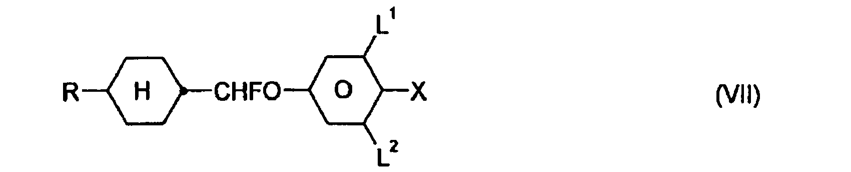 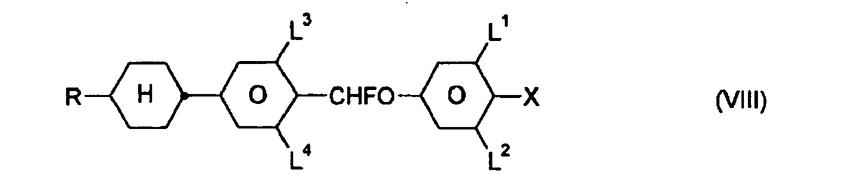 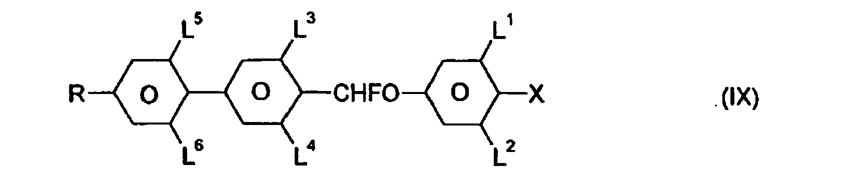 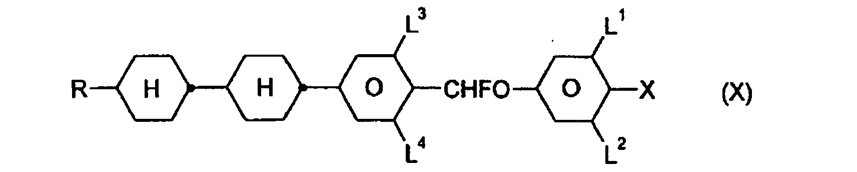 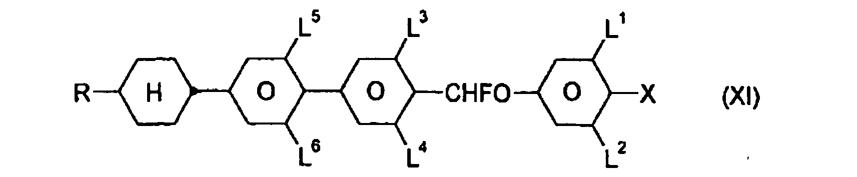 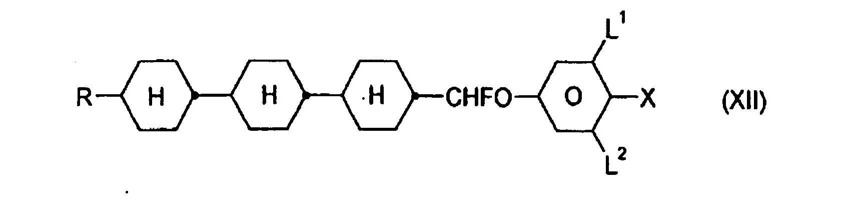 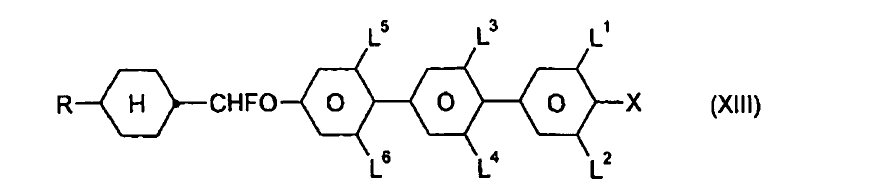 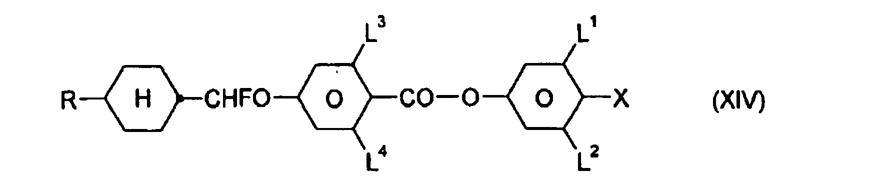 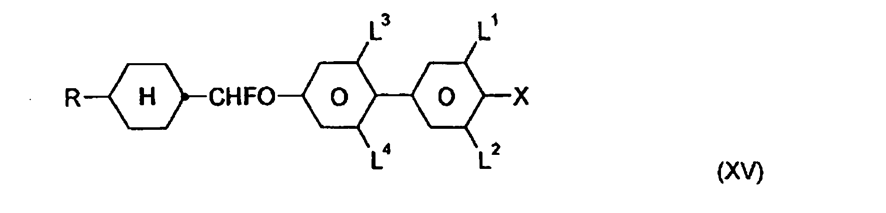 in which
L¹⁻⁶ are each, independently of one another, H or F.

3. Liquid-crystalline medium composed of at least two liquid-crystalline compounds, comprising at least one liquid-crystalline compound according to Claim 1 or 2.

4. Electro-optical liquid-crystal display containing a liquid-crystalline medium according to Claim 3.

## Revendications

1. , Composés de cristal liquide de la formule générale (II) ou (III)
R-AₙZ¹-A-X (II)
R-A-Z¹-A-Z²-Aₘ-X (III)
dans laquelle
A est, dans chaque cas indépendamment des autres, 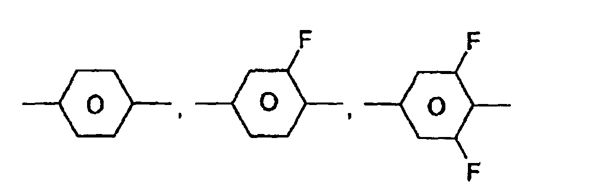 ou 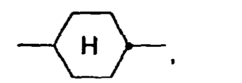
Z¹ est -CHF-O-,
Z² est une liaison simple ou -CO-O-,
X est -F, -Cl, -CN, -CF₃, -OCF₃ ou -OCHF₂,
R est hydrogène, un radical alkyle, alkoxy, alkényloxy ou alkényle linéaire ou ramifié non substitué ou mono- ou polysubstitué par fluor comportant respectivement de 1 à 10 ou de 2 à 10 atomes de C, où un ou plusieurs groupes CH₂ peuvent être remplacés par -O-,
n est 1, 2 ou 3,
m est 1 ou 2.

2. . Composés de cristal liquide selon la revendication 1 des formules générales (VI) - (XV) 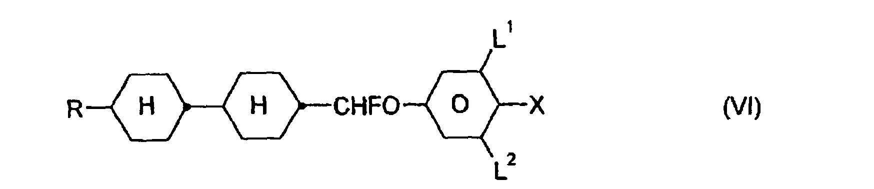 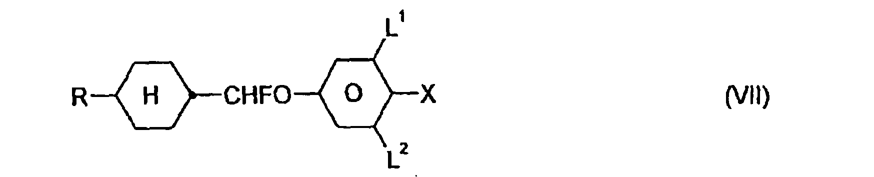 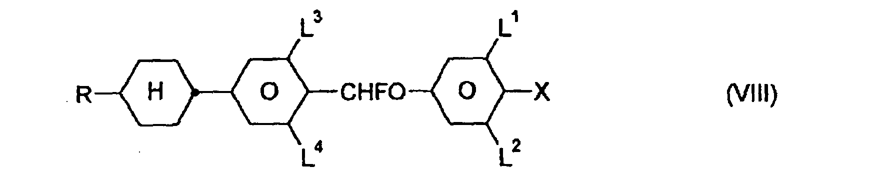 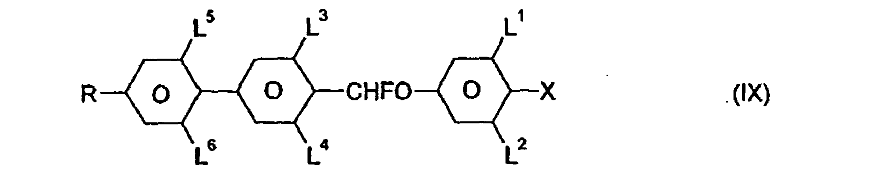 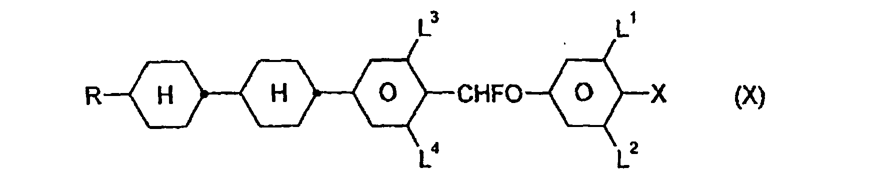 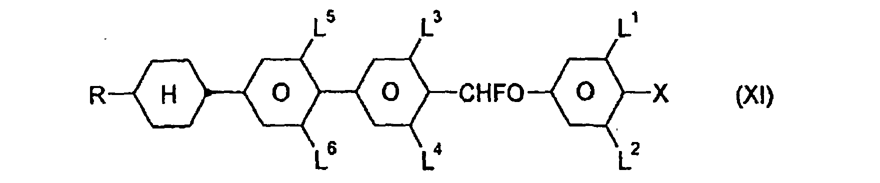 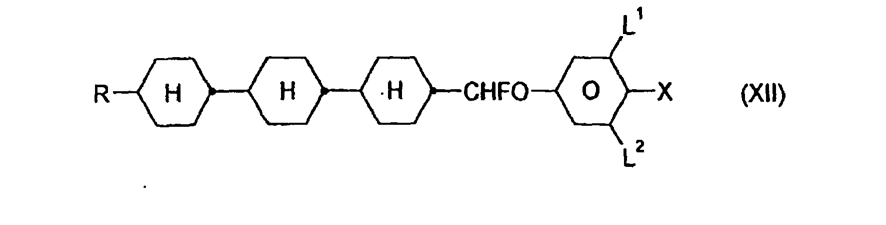 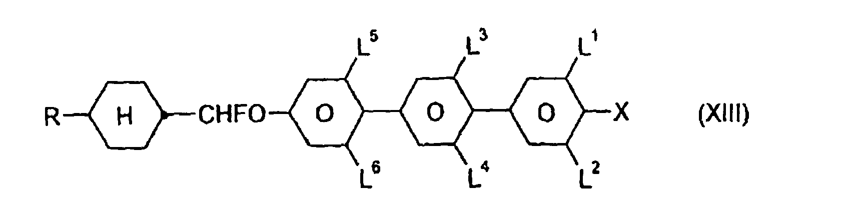 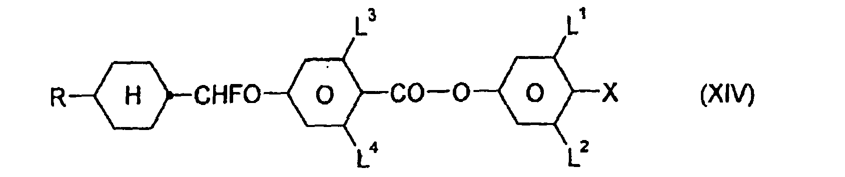 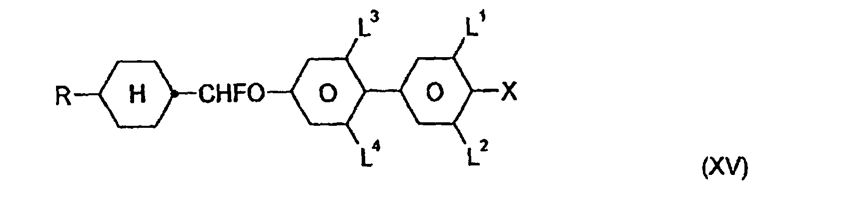 dans lesquelles
L¹⁻⁶ sont, chacun indépendamment des autres, H ou F.

3. . Milieu de cristal liquide composé d'au moins deux composés de cristal liquide, comprenant au moins un composé de cristal liquide selon la revendication 1 ou 2.

4. . Affichage à cristaux liquides électro-optique contenant un milieu de cristal liquide selon la revendication 3.
